# FASCICULE DE BREVET EUROPEEN

(11) **EP 3 476 056 B1**
(45) Date de publication et mention de la délivrance du brevet: **06.08.2025**
(21) Numéro de dépôt: 17731647.8
(22) Date de dépôt: 07.06.2017
(51) Int. Cl.: H04B 3/54

(54) **DISPOSITIF, SYSTÈME ET PROCÉDÉ POUR RECEVOIR SÉLECTIVEMENT DES DONNÉES DIFFUSÉES DANS UN RÉSEAU**
VORRICHTUNG, SYSTEM UND VERFAHREN ZUM SELEKTIVEN EMPFANGEN VON DATENRUNDFUNK IN EINEM NETZWERK
DEVICE, SYSTEM AND METHOD FOR SELECTIVELY RECEIVING DATA BROADCAST IN A NETWORK

(30) Priorité: 28.06.2016 FR 1601021
(43) Date de publication de la demande: 01.05.2019
(73) Titulaire: Ergylink, 92300 Levallois-Perret (FR)
(72) Inventeur: GILBERT, Jerome, 92300 Levallois Perret (FR)
(86) Numéro de dépôt international: PCT/IB2017/053359
(87) Numéro de publication internationale: WO 2018/002746

(56) Documents cités:
- US-A1- 2002 065 583
- US-A1- 2003 151 491

## Description

### Domaine technique

L'invention se situe dans le domaine des télécommunications.

### Etat de la technique antérieure

Il existe des besoins auxquels les solutions techniques connues ne permettent pas de répondre de manière satisfaisante comme par exemple le besoin d'équilibrage dynamique des réseaux électriques ou des besoins dans le domaine de la gestion d'un parc d'objets connectés. En effet, l'équilibrage du réseau électrique nécessite la transmission simultanée de télécommandes visant à effacer ou à activer des consommations diffuses simultanément dans un grand nombre d'installations, ceci sur des territoires dont la couverture nécessite une pluralité d'émetteurs ou de transmetteurs. Les réseaux de télécommunication cellulaires par radio classiques sont conçus pour adresser un terminal en particulier et ne sont pas adaptés pour diffuser simultanément un message ayant la même finalité à des quantités massives de récepteurs. Les réseaux de diffusion de flux de contenus radiophoniques et télévisuels numériques sont optimisés pour la diffusion simultanée des mêmes informations à des quantités massives de récepteurs mais leur capacité à sélectionner les zones de diffusion se fait à une maille trop grande pour répondre aux besoins de sectorisation plus fine du domaine de l'énergie. Les nouveaux réseaux radio de type « faible-puissance large-étendue » (« Low-Power Wide-Area » en langue anglaise connus aussi sous l'acronyme « LPWA ») ont été conçus pour adresser individuellement des objets connectés à alimentation autonome ayant des informations à remonter dans un système d'information. La plupart de ces systèmes ne sont pas prévus nativement pour favoriser la diffusion simultanée d'informations à de grandes quantités d'objets dont la réception doit rester continument active. Les solutions de communications par courants porteurs en ligne connues présentent les mêmes problèmes et limitations que les solutions de communications par radio, elles ne sont pas non plus adaptées aux besoins des applications visées par l'invention. On connait les demandes de brevet US 2002/065583 A1 et US 2003/151491 A1 comme ayant été identifiées en tant qu'état de la technique pertinent le plus proche de l'invention.

### Exposé de l'invention

La présente invention est définie par les revendications indépendantes ci-jointes. D'autres modes de réalisation préférés peuvent être trouvés dans les revendications dépendantes. La présente demande concerne un dispositif (1) pour recevoir sélectivement des données diffusées simultanément à un sous-ensemble prédéterminé de dispositifs destinataires parmi des quantités massives de récepteurs qui sont aptes à recevoir physiquement les données qui sont diffusées par radio ou par courants porteurs en ligne dans un réseau de télécommunication ou dans un réseau de diffusion de signaux numériques, comprenant :$
- au moins un sous-ensemble de traitement numérique (4) comprenant au moins un microprocesseur (5), au moins une mémoire de programme (6);
- un sous-ensemble d'alimentation basse-tension (12) fournissant au moins une tension continue pour alimenter les moyens matériels du dispositif (1), ledit sous-ensemble d'alimentation étant alimenté par au moins une source d'énergie (13); ledit dispositif (1) étant caractérisé en ce qu'il comprend en outre :
- des premiers moyens (2) pour recevoir au moins une donnée de configuration utilisable pour limiter la réception effective des données diffusées aux seuls dispositifs préalablement déterminés, l'au moins une donnée de configuration étant transmise dans le cadre d'une liaison point à point entre au moins un système d'information distant et le dispositif (1);
- des seconds moyens (3) pour recevoir des données diffusées comprenant des données déterminant la sélectivité de la diffusion;
- l'au moins un sous-ensemble de traitement numérique (4) comprenant en outre une interface (7) avec lesdits premiers moyens (2), une interface (8) avec lesdits seconds moyens (3), une interface (9) avec des moyens (10) pour utiliser des données reçues par lesdits seconds moyens (3), au moins une mémoire (11) pour stocker tout ou partie de l'au moins une donnée de configuration ou d'au moins un identifiant d'émetteur de diffusion, au moins un programme (14) pour déterminer si des données diffusées reçues doivent être utilisées ou ignorées par le dispositif (1) en fonction desdites données déterminant la sélectivité de la diffusion, et de tout ou partie de l'au moins une donnée ayant été préalablement stockée dans l'au moins une mémoire (11).

### Brève description des dessins

D'autres avantages et caractéristiques de l'invention apparaîtront à l'examen de la description détaillée de modes de mise en œuvre nullement limitatifs, et des dessins annexés où :
La figure 1 illustre la structure du dispositif selon l'invention.
La figure 2 illustre la combinaison : configurateur local et diffusion CPL.
La figure 3 illustre la combinaison : compteur électronique et diffusion CPL.
La figure 4 illustre la combinaison : compteur communicant et diffusion CPL.
La figure 5 illustre la combinaison : CPL point à point et diffusion CPL.
La figure 6 illustre la combinaison : radio point à point et diffusion CPL.
La figure 7 illustre la combinaison : radio point à point et réseau de diffusion.
La figure 8 illustre la combinaison : radio bimodale point à point et diffusion.
La figure 9 illustre une variante optimisée de combinaison radio bimodale.
La figure 10 illustre le procédé de réception sélective des données diffusées.
La figure 11 illustre le procédé de diffusion sélective des données sur objectif.
La figure 12 illustre le procédé de mise à jour de la base de données réseau.
La figure 13 illustre la sélectivité en fonction des émetteurs de diffusion.

### Description détaillée des figures et des modes de réalisation

D'autres particularités et avantages de l'invention apparaîtront encore dans la description ci-après. Aux dessins annexés donnés à titre d'exemples non limitatifs :

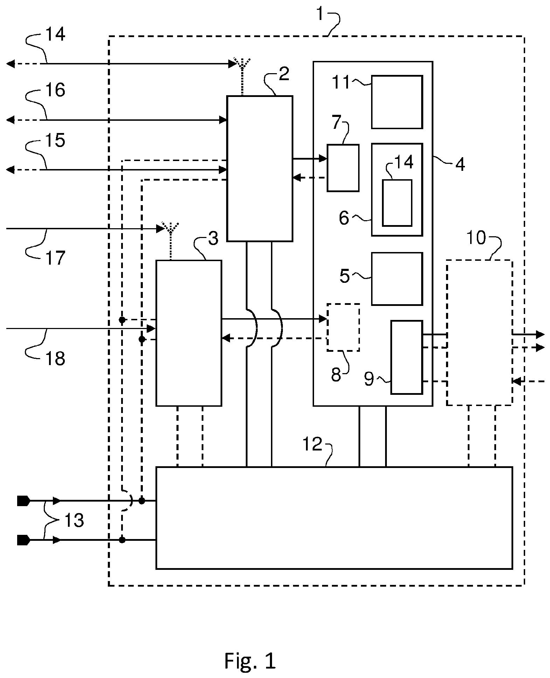

La figure **1** illustre la structure du dispositif selon l'invention.

Le dispositif 1 comprend des premiers moyens 2 matériels et/ou logiciels pour recevoir au moins une donnée de configuration transmise dans le cadre d'une liaison point à point entre un équipement externe, partie d'un réseau de télécommunication ou isolé, et ledit dispositif. Les choix de mise en œuvre des moyens 2 sont déterminés par le type de liaison physique et/ou logique de l'équipement externe auquel il est prévu de se connecter. L'invention prévoit que les moyens 2 permettent, seuls ou en combinaison avec le sous-ensemble de traitement numérique 4, d'établir une liaison de données point à point par radio 14, et/ou par CPL 15 et/ou par tout autre moyen 16. Ces liaisons sont au moins unidirectionnelles dans le sens allant de l'équipement externe vers le dispositif selon l'invention. Il est fréquent cependant que dans le cas des liaisons par radio et par CPL, les liaisons soient bidirectionnelles. En effet il est fréquent que le protocole de communication utilisé impose des communications dans les deux sens au moins pour établir la liaison et le cas échéant pour contrôler les flux de données, pour remonter des accusés de réception au transmetteur etc. Le dispositif comprend aussi des seconds moyens 3 matériels et/ou logiciels pour recevoir des données diffusées par au moins un émetteur, par radio et/ou par CPL. Les données reçues comprennent par exemple des données de commande et/ou des données déterminant la sélectivité de la diffusion et/ou des données additionnelles, et/ou un identifiant d'émetteur de diffusion. Lesdites données étant diffusées simultanément à destination d'une pluralité de récepteurs par radio et/ou par CPL. L'invention prévoit que les moyens 3 permettent, seuls ou en combinaison avec le sous-ensemble de traitement numérique 4, de recevoir des données diffusées par radio 17, et/ou par CPL 18. Les moyens 3, qui sont optimisés pour recevoir des données diffusées à des quantités massives de récepteurs, sont le plus souvent unidirectionnels dans le sens allant des équipements d'émission de l'infrastructure de diffusion vers les dispositifs. L'au moins un sous-ensemble de traitement numérique 4 comprend au moins un microprocesseur 5 accompagné des ressources matérielles nécessaires à son fonctionnellement comme par exemple une source d'horloge, par exemple un quartz externe complété le cas échéant par exemple par quelques composants passifs tels que deux condensateurs, un oscillateur intégré, un générateur d'horloge comprenant une boucle à verrouillage de phase etc.; une ou plusieurs mémoires de travail, par exemple de type RAM statique ou dynamique agencées selon les architectures mono ou multicœur du microprocesseur, avec ou sans cache d'instructions, basée sur des registres ou non etc. L'au moins un sous-ensemble de traitement numérique 4 comprend aussi au moins une mémoire de programme 6. Il s'agit avantageusement de mémoire non volatile, par exemple de type « Flash », et encore plus avantageusement de mémoire non volatile agencée pour qu'au moins une partie de sa capacité soit réinscriptible in situ de sorte que le logiciel du dispositif puisse facilement être mis à jour, voire dans les variantes les plus sophistiquées, être mis à jour automatiquement à distance. Outre le cas traditionnel d'un programme exécuté par un processeur unique, il est aussi prévu le cas d'une exécution répartie dans plusieurs microprocesseurs partageant une mémoire de programme ou disposant chacun d'une mémoire de programme dédiée. L'au moins un sous-ensemble de traitement numérique 4 comprend aussi une interface 7 matérielle et/ou logicielle avec lesdits premiers moyens 2 matériels et/ou logiciels pour recevoir des données et une interface 8 matérielle et/ou logicielle avec lesdits seconds moyens 3 matériels et/ou logiciels pour recevoir des données. Il existe de nombreuses variantes de mise en œuvre de l'invention selon la nature matérielle, logicielle ou combinée desdits premiers et seconds moyens pour recevoir des données, selon que ces moyens pour recevoir des données sont externes ou embarqués dans l'au moins un sous-ensemble de traitement numérique 4, ou réciproquement que l'au moins un sous-ensemble de traitement numérique 4 est embarqué dans les premiers moyens, dans les seconds moyens, ou dans des moyens combinés pour recevoir des données. Les interfaces dont il est question sont par exemple, lorsqu'il s'agit interagir avec un modem externe, un ou plusieurs blocs fonctionnels matériels intégrés prévus pour assurer des communications série entre sous-systèmes ou entre composants électroniques, par exemple des blocs fonctionnels de type « UART », « SPI », « I2C », « I3C », « USB » etc. il est aussi prévu d'utiliser des périphériques banalisés fréquemment associés à un microprocesseur dans des composants plus intégrés tels que des microcontrôleurs ou des systèmes sur une puce. Il s'agit par exemple de lignes d'entrée-sortie et/ou d'une entrée d'interruption utilisés pour émuler un bloc matériel « UART », « SPI », « I2C », « I3C », « USB » etc., en particulier lorsqu'il s'agit de transmissions de données à bas débit pour lesquelles les mises en œuvre émulées sont suffisamment performantes sans surcharge du microprocesseur. Il est aussi prévu que les interfaces soient exclusivement logicielles lorsque que les moyens pour recevoir les données sont mis en œuvre par logiciel dans le même environnement d'exécution que les autres traitements du dispositif selon l'invention, par exemple dans le cas d'un récepteur numérique de télécommandes à fréquence vocale. De telles interfaces logicielles peuvent par exemple utiliser la plupart des solutions techniques connues de la personne du métier pour échanger des données et/ou pour synchroniser des processus mis en œuvre par logiciel (par positionnement de drapeaux, par l'intermédiaire de la pile (« stack » en langue anglaise), par « interruption logicielle », par appel de sous-programme etc.).

L'au moins un sous-ensemble de traitement numérique 4 comprend aussi une interface 9 matérielle et/ou logicielle avec des moyens 10 pour utiliser des données reçues par lesdits seconds moyens matériels et/ou logiciels pour recevoir des données. La nature de l'interface 9 matérielle et/ou logicielle dépend de la nature desdits moyens 10 pour utiliser des données reçues selon l'invention. Dans le cas le plus simple d'un appareil autonome de type « relais télécommandé » comprenant un dispositif de réception selon l'invention, les moyens 10 comprennent au moins un relais et sa circuiterie électronique de commande à partir de l'état logique d'une ligne d'entrée sortie comprise dans l'interface 9. Dans le cas d'appareils plus sophistiques comprenant un dispositif de réception selon l'invention, par exemple un gestionnaire d'énergie, ou un appareil de chauffage et/ou de climatisation et/ou encore de production d'eau chaude sanitaire, les moyens 10 pour utiliser les données reçues sont par exemple un sous-ensemble électronique de régulation thermique et de gestion des fonctionnalités de l'appareil. Les moyens d'interface 9 correspondants sont alors par exemple selon les choix de mise en œuvre, par exemple un « UART », « SPI », « I2C », « I3C », « USB » sous la forme d'un bloc matériel spécialisé ou d'un bloc fonctionnel émulé. Il est aussi prévu d'utiliser comme moyens d'interface, des lignes d'entrés sorties directement connectées au sous-ensemble électronique utilisateur des données ou encore connecté après amplification de courant par l'utilisation d'un circuit tampon ou encore après isolation galvanique par l'utilisation de coupleurs optiques, capacitifs ou inductifs. Il est aussi prévu dans certaines applications par exemple pour télécommander le fonctionnement d'un climatiseur, que les moyens d'interface soient un émetteur de signaux infrarouges compatibles avec ceux attendus par le récepteur de télécommande du climatiseur. Lesdits signaux infrarouges étant modulés au moyen d'un logiciel approprié pour émuler les signaux transmis par la télécommande infrarouge manuelle native de l'appareil. Chaque ressource matérielle mise en œuvre pour réaliser un bloc fonctionnel d'interface 7, 8, 9 est complété par un ou plusieurs logiciels appropriés pour le piloter et/ou pour réaliser une émulation de fonction ou de sous fonction habituellement prise en charge par un bloc matériel spécialisé. Il est à noter que l'utilisation des données reçues selon l'invention ne concerne pas seulement le pilotage de charges, d'actionneurs ou d'appareil externes. Il est aussi prévu que la réception d'une commande diffusée sélectivement selon l'invention soit utilisée pour acquérir une information comme par exemple l'état fonctionnel d'un équipement externe, une mesure d'une ou plusieurs grandeurs physiques, d'un paramètre physiologique d'une personne etc.

Le dispositif selon l'invention comprend en outre au moins une mémoire 11 pour stocker tout ou partie de l'au moins une donnée de configuration et/ou au moins un identifiant d'émetteur de diffusion. Toutes les technologies de mémoires non volatile connues et futures conviennent à l'usage qui en est fait dans le cadre de l'invention, par exemple de la mémoire « RAM » à alimentation sauvegardée, « EEPROM », FeRAM, MRAM, NRAM, PRAM, RRAM etc. Des technologies moins endurantes de les précédentes en nombre de cycles d'écriture comme de la mémoire de type « Flash » réinscriptible in situ sont aussi utilisables dans le cadre de l'invention en tant que mémoire 11 compte tenu de la faible fréquence des mises à jour des données de configuration dans la plupart des cas d'utilisation et de techniques pouvant être mises en œuvre par logiciel pour augmenter l'endurance de telles mémoires. Il est prévu que dans des variantes de mise en œuvre de l'invention lesdites données de configuration à stocker de manière permanente soit réparties dans plusieurs mémoires physiquement séparées en fonction par exemple de la nature des données et de la disponibilité de ressources mémoire. En effet, il est fréquent de trouver un bloc mémoire non volatile dans la plupart des circuits à semi-conducteurs très intégrés parce que le besoin de stocker des données d'étalonnage ou de paramétrage existe dans la plupart des applications. Il est en effet courant de trouver au moins un bloc fonctionnel de mémoire non volatile dans les microcontrôleurs, dans les systèmes sur une puce et même dans des circuits d'interface, de conversion ou dans des capteurs à semi-conducteurs. Ces blocs de mémoire non volatile sont agencés en général pour offrir une capacité de stockage excédentaire relativement aux besoins primaires qui ont justifié leur intégration dans un composant, et pour que tout ou partie de la capacité de stockage soit librement accessible au moyen d'une interface matérielle et/ou logicielle appropriée. Selon les variantes de mise en œuvre, il est prévu que l'invention utilise une mémoire comprise dans l'au moins un sous-ensemble de traitement numérique 4, et/ou dans lesdits premiers moyens 2 matériels et/ou logiciels pour recevoir au moins une donnée de configuration et/ou dans lesdits seconds moyens 3 matériels et/ou logiciels pour recevoir des données. Le sous-ensemble d'alimentation basse-tension 12 fournit au moins une tension continue appropriée en tension et en courant pour alimenter les moyens matériels mis en œuvre dans le cadre d'une variante donnée de l'invention. Il s'agit par exemple de fournir une tension continue de 5 V à l'au moins un sous-ensemble de traitement numérique et, le cas échéant, aux premier, second ou moyens combinés de réception. Le sous-ensemble d'alimentation basse-tension 12 fournit aussi le cas échéant la ou les tensions aux courants appropriés auxdits moyens 10 pour utiliser des données reçues, dans le cas d'au moins un relais électromécanique, l'alimentation 12 fournit par exemple une tension continue de 24 V à raison de par exemple 50 mA par relais mis en œuvre. La source d'énergie 13 est le plus souvent le réseau électrique basse tension par exemple à 230 VAC ou 110 VAC, à 50 ou 60 Hz, en particulier dans les mises en œuvre de l'invention recevant des données par courants porteur et/ou dans celles dont l'utilisation des données requiert un raccordement au réseau électrique comme dans le cas du pilotage de tous les appareils électriques de puissance. Il est aussi prévu que la source d'énergie 13 soit issue d'un réseau à basse tension continue comme par exemple celle d'un réseau véhiculaire à 12 VDC, 24 VDC ou 48 VDC. Il est aussi prévu des utilisations de l'invention dans le cadre d'objets communicants autonomes et/ou à très basse puissance, par exemple des capteurs de données environnementales ou en rapport avec la surveillance des réseaux à haute tension ou encore dans le cadre de dispositifs médicaux connectés pour la mesure de paramètres physiologiques, lorsqu'on souhaite synchroniser l'échantillonnage des mesures et/ou ou l'étalement temporel des transmissions des données résultantes par radio. Dans ces variantes de mise en œuvre de l'invention il est prévu que la source d'énergie 13 soit par exemple un générateur électrochimique tel qu'une pile au lithium ou tout générateur approprié pour collecter de l'énergie dans l'environnement du dispositif selon l'invention et la transformer en électricité. Par exemple un générateur photovoltaïque, électroaéraulique, électrocinétique, électrothermique, le générateur étant complété le cas échéant par un moyen de stockage d'énergie tampon tel qu'un ou plusieurs supercondensateurs ou une batterie électrochimique pour pallier d'éventuelles intermittences de la fourniture d'énergie.

Le dispositif selon l'invention comprend en outre au moins un programme 14 pour déterminer si des données diffusées reçues doivent être utilisées ou ignorées par le dispositif 1 en fonction de données diffusées reçues déterminant la sélectivité de la diffusion, et de tout ou partie de l'au moins une donnée de configuration et/ou de l'au moins un identifiant d'émetteur de diffusion ayant été préalablement stocké dans l'au moins une mémoire 11. Selon les variantes de mise en œuvre, ce programme est par exemple exécuté en tout ou partie par l'au moins un microprocesseur de l'au moins un sous-ensemble de traitement numérique 4 et/ou par un microprocesseur compris dans lesdits seconds moyens 3 pour recevoir des données et/ou par un microprocesseur compris dans des moyens communs aux sous-ensembles fonctionnels 3 et 4 ou communs aux sous-ensembles fonctionnels 2, 3 et 4. Les exemples de mise en œuvre de l'invention illustrés par les figures suivantes éclaireront plus en détail la mise en œuvre de l'invention dans les principaux cas d'utilisation prévus.

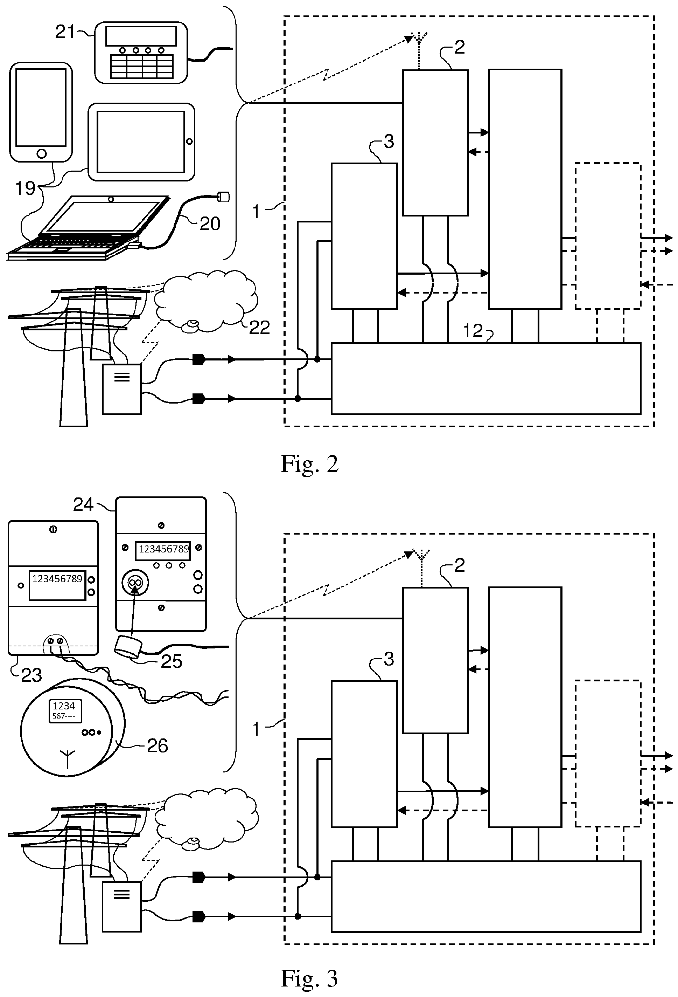

La figure **2** illustre la combinaison : configurateur local et diffusion CPL.

Dans cette variante de l'invention, lesdits premiers moyens 2 matériels et/ou logiciels pour recevoir des données dites de configuration sont des moyens pour établir une liaison point à point avec un outil de configuration locale utilisé par l'installateur du dispositif 1. L'outil de configuration locale est par exemple un appareil standard 19 capable d'exécuter un logiciel d'application utilisable pour configurer le dispositif selon l'invention. Il s'agit par exemple d'un smartphone, d'une tablette numérique ou d'un ordinateur portable. Le logiciel d'application est par exemple un logiciel spécifiquement conçu pour la configuration du dispositif selon l'invention ou un logiciel d'application standard universel tel qu'un émulateur de terminal ou encore un navigateur web. **En effet,** certaines variantes de mise en œuvre de l'invention embarquent un microserveur web permettant d'utiliser un navigateur standard pour configurer localement, voire à distance, le dispositif. Lorsque lesdits premier moyens pour recevoir des données de configuration ne correspondent pas à un standard de connectivité filaire ou sans fil proposé d'origine sur les appareils 19, comme par exemple USB, Bluetooth, WiFi etc., un adaptateur 20 spécifique à la mise en œuvre de l'invention est prévu. Un tel accessoire est par exemple un câble dont une extrémité est terminée par un connecteur compatible avec un port standard disponible sur la plupart des terminaux, par exemple un port USB dit « host », et l'autre extrémité est terminée par un coupleur spécifique à la mise en œuvre de l'invention. Cette solution technique est souvent la seule solution filaire possible pour des raisons de conformité aux normes de sécurité électrique lorsque l'électronique basse tension du dispositif selon l'invention n'est pas isolée du réseau électrique comme c'est généralement le cas des appareils de gestion de l'énergie. Le coupleur présent à l'extrémité du câble 20, du côté dispositif, permet selon les variantes de mise en œuvre d'établir une liaison uni ou bidirectionnelle par l'intermédiaire d'un couplage optique, acoustique, inductif, capacitif etc. Il est aussi prévu d'utiliser comme outil de configuration un appareil de type terminal 21 conçu spécifiquement pour la configuration de dispositifs selon l'invention, le terminal spécifique étant le cas échéant équipé du coupleur approprié. Lesdits seconds moyens 3 matériels et/ou logiciels pour recevoir des données sont un récepteur de signaux transmis par CPL. Il s'agit par exemple d'un sous-ensemble conçu exclusivement pour la réception de signaux CPL, ou d'un transmetteur bidirectionnel utilisé en récepteur. Dans certaine variantes de mise en œuvre, pour des raisons de facilité d'approvisionnement des composants électroniques spécialisés qui sont nativement bidirectionnels, il est prévu d'optimiser la réalisation des seconds moyens matériels en utilisant un circuit intégré modem CPL bidirectionnel mais en ne montant pas les composants utilisés exclusivement pour l'émission des données et en sous-dimensionnant les caractéristiques techniques de composants communs à la réception et à l'émission des données. Ceci en particulier au niveau du bloc fonctionnel connu de la personne du métier sous le nom de « frontal analogique » dont il est possible de supprimer l'amplificateur de puissance et de sous-dimensionner le couplage haute fréquence au réseau électrique basse tension relativement à une mise en œuvre bidirectionnelle. Un tel sous-équipement permet aussi des gains indirects sur l'encombrement et sur le coût de l'alimentation basse tension 12 du dispositif dont la puissance peut être sensiblement réduite du fait de la suppression ou de la désactivation de la partie émission d'un sous-ensemble de transmission bidirectionnel. Il est aussi prévu que lesdits seconds moyens 3 matériels et/ou logiciels soient un récepteur CPL à « basse-fréquence large-étendue » dit Télécommandes Centralisées à Fréquence Musicale. Par exemple en France un récepteur conforme au standard « EDF HN 96-S-65 » variante 175 Hz et/ou 188 Hz, version plein ou demi-taux. Le choix de ladite variante et/ou de ladite version dans le cas des TCFM, ou dans le cas des CPL haute fréquence, le choix d'autres paramètres affectant la réception en ce qu'ils caractérisent par exemple des options de modulation ou le choix de fréquences porteuses, font le cas échant partie desdites données de configuration selon l'invention pour prédéterminer les paramètres techniques de la réception par lesdits second moyens des données diffusés. Un réseau de télécommunication 22 associé à au moins un système d'information comprend les ressources d'émission impliquées dans la diffusion des données. En l'espèce, lorsqu'il s'agit de diffusion par TCFM, l'au moins un système d'information pilote une ou plusieurs baies d'émission localisées dans des postes sources du réseau de distribution électrique via une infrastructure télécom. Celle-ci étant avantageusement basée sur le protocole IP et protégée contre les intrusions malveillantes. Dans le cas de l'utilisation des CPL haute fréquence, le système d'information pilote directement ou indirectement des concentrateurs CPL qui desservent directement ou indirectement des points de réception selon l'invention. On entend par « desservir directement » les cas de mise en œuvre de l'invention où lesdits seconds moyens pour recevoir des données sont des récepteurs CPL. On entend par « desservir indirectement » les cas de mise en œuvre de l'invention où lesdits seconds moyens pour recevoir des données sont des moyens pour revoir des informations venant d'un équipement externe qui contient le récepteurs radio ou CPL. Par exemple lorsque le dispositif selon l'invention est connecté, par ses dits second moyens pour recevoir des données, à un compteur électronique communicant qui contient le récepteur radio ou CPL. Il est prévu en outre que le compteur utilisé pour recevoir les données diffusées soit un compteur électronique communicant de gaz, d'eau ou de chaleur, l'invention n'étant pas limitée au cas des compteurs d'énergie électrique.

La figure **3** illustre la combinaison : compteur électronique et diffusion CPL.

Cette variante de mise en œuvre de l'invention se distingue de celle de la figure 2 en ce que l'au moins une donnée de configuration est au moins en partie obtenue d'un compteur électronique auquel le dispositif 1 est au moins une fois connecté. On entend par compteur électronique tout compteur par exemple d'énergie électrique, de gaz, d'eau, de chaleur etc. comprenant un sous-ensemble électronique pour faciliter l'affichage et/ou la relève des index de comptage et disposant d'une sortie d'information connectable à un dispositif externe. Il s'agit par exemple d'un compteur électronique 23 à sortie filaire dite « Télé-information client » comme fréquemment utilisé en France, un compteur 24 à sortie infrarouge, équipé le cas échéant d'un accessoire de connexion 25, comme fréquemment utilisé en Allemagne ou un compteur 26 à sortie radio comme fréquemment utilisé aux Etats-Unis d'Amérique. Lesdits premiers moyens 2 matériels et/ou logiciels pour recevoir des données dites de configuration sont connectés au moins une fois, de manière discontinue ou permanente au compteur par une interface appropriée au type de sortie native ou secondaire du compteur. Il est en effet prévu de simplifier l'installation du dispositif en équipant les compteurs à sortie filaire ou infrarouge d'une mini-passerelle autonome retransmettant par radio à courte portée les informations sortant du compteur vers un point de réception unique compatible connecté auxdits premiers moyens 2 du dispositif 1 selon l'invention associé au compteur, ou formant directement ces derniers. Il est prévu par exemple d'exploiter tout ou partie du numéro de série du compteur qui fait souvent partie des informations transmises par un compteur électronique, pour diffuser sélectivement les données au sous-ensemble des seuls dispositifs associés à un compteurs ayant un numéro de série pair ou, pour réduire davantage la taille du sous-ensemble des dispositifs visés par la diffusion, ne prendre en compte que les numéros de série divisibles par 3 ou par 7 etc. L'impact de telles diffusions, par exemple sur le plan de la puissance cumulée dans des applications de gestion de réseau électrique est aisé à prédéterminer. Par exemple au moyen d'une base de données comprenant les numéros de série complets d'un ensemble de compteurs, les puissances unitaires contrôlées par l'intermédiaire de chacun d'entre eux et leur localisation géographique le cas échéant ainsi qu'un programme informatique déterminant la formule mathématique et/ou la formule de logique combinatoire à utiliser sur un jeu de données prédéterminé pour atteindre un objectif de puissance cumulée donné. Il est prévu d'utiliser en tout ou partie, seule ou en combinaison logique, toute information numérique issue du compteur et susceptible d'être pertinente pour pouvoir rendre sélective la diffusion selon l'invention. Ainsi des informations comme le type d'abonnement souscrit, l'intensité ou la puissance souscrite, le code tarifaire associé etc. sont parfaitement utilisables selon l'invention pour rendre sélective la diffusion logique d'information reçue par lesdits seconds moyens 3 pour recevoir des données en utilisant tout ou partie de ces informations comme critères dans des tests d'identité entre des valeurs locales et des valeurs comparables diffusées reçues pour déterminer si des données diffusées reçues doivent être utilisées ou ignorées par le dispositif récepteur. Il est aussi prévu d'utiliser les moyens de réglage et de visualisation du compteur, qui peuvent offrir une meilleure ergonomie et davantage de possibilités que ceux du dispositif selon l'invention qui dans certaines variantes simplifiées en est totalement dépourvu. Il est prévu que le réglage ou le paramétrage approprié du dispositif selon l'invention soit réalisé par un technicien au moment de l'installation du compteur connecté audit dispositif. Il est aussi prévu de réaliser le réglage ou le paramétrage du dispositif par anticipation. Le technicien effectue alors le réglage ou le paramétrage approprié du dispositif selon l'invention lors de l'installation ou lors d'une intervention sur le compteur sans qu'aucun dispositif selon l'invention ne soit encore installé et connecté. Les données associées à ce réglage préalable sont stockées dans une mémoire non volatile du compteur dans le cadre de son fonctionnement normal. Ainsi, possiblement longtemps après le réglage ou le paramétrage, si un dispositif selon l'invention est connecté au compteur, alors il bénéficie automatiquement des données de configuration transmises par la sortie de données dans le cadre du fonctionnement normal du compteur, ceci sans qu'un technicien habilité à accéder au réglage du compteur ne doive revenir physiquement sur site.

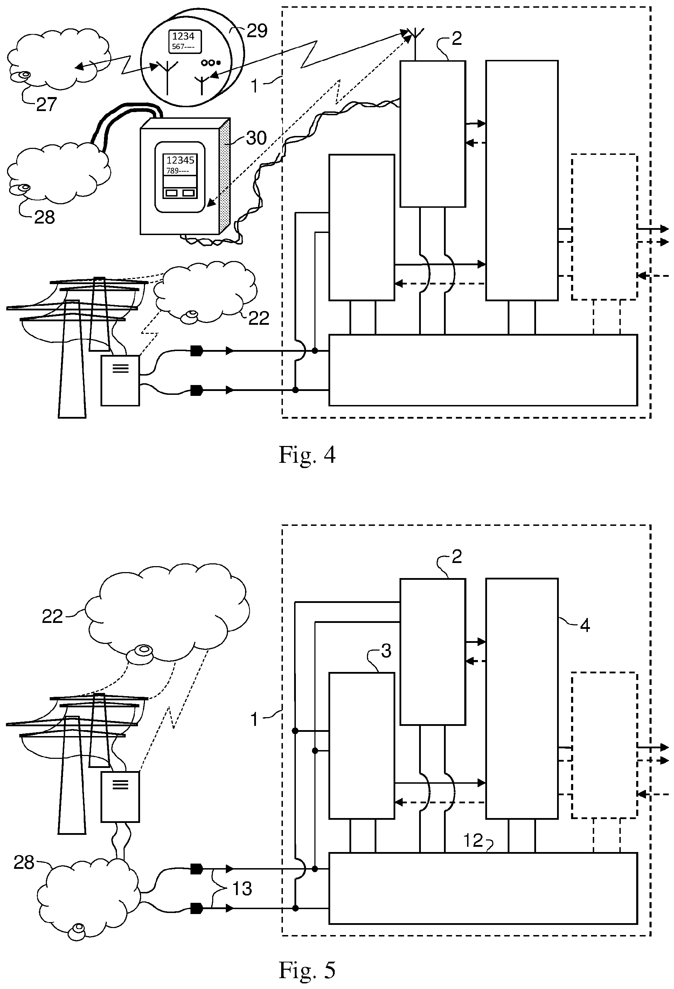

La figure **4** illustre la combinaison : compteur communicant et diffusion CPL.

Cette variante de mise en œuvre de l'invention se distingue de celle de la figure 3 en ce que le compteur connecté au dispositif 1 est aussi connecté par des moyens appropriés, de manière continue ou discontinue, à un réseau de télécommunication 27, 28 et à au moins un système d'information distant par l'intermédiaire d'un ou de plusieurs réseaux de télécommunication interconnectés. Il est prévu que l'infrastructure utilisée pour transmettre les données soit au moins pour sa partie terminale, exclusivement dédiée à la gestion d'un parc de compteurs ou qu'elle soit partagée avec d'autres usages. De même, il est prévu que les réseaux de télécommunication 27, 28, 22 soient différenciés, ou en tout ou partie communs, selon les techniques de transmission utilisées et/ou selon des contraintes non techniques telles que réglementaires, juridiques ou commerciales. Dans les variantes de la figure 4, le compteur électronique d'électricité, de gaz, d'eau ou de chaleur comprend des moyens pour établir une liaison de donnée point à point bidirectionnelle avec une infrastructure de réseau. Il s'agit le plus souvent de permettre la télérelève des index de comptage et dans certain cas, aussi la gestion à distance des caractéristiques techniques du contrat de fourniture au point de livraison pour un client donné. Par exemple la coupure et le rétablissement de la fourniture, le réglage à distance de limitations telles que l'intensité maximale du soutirage etc. Ces moyens pour transmettre et pour recevoir des données à longue distance dans le cadre d'une liaison point à point entre un opérateur ou un gestionnaire et un client identifié sont avantageusement utilisables dans le cadre de l'invention pour transmettre des données de configuration au dispositif 1. Ceci pour rendre sélective des diffusions de données ultérieur à un grand nombre de clients déterminés. Les avantages de l'utilisation d'un appareil tiers tel qu'un compteur communicant pour faire fonction de passerelle de télécommunication sont nombreux. Par exemple, la gestion d'un contrat de fourniture ayant un caractère sensible sur les plans juridique, économique, de la protection des données, de la protection contre les intrusions malveillantes etc., les moyens techniques mis en œuvre pour les communications des données avec l'infrastructure sont sûrs, fiables et le plus souvent cryptés. L'utilisation indirecte de tels moyens dans le cadre de l'invention permet de bénéficier d'un haut niveau de qualité dans la transmission des données sans avoir à mettre en œuvre des moyens techniques sophistiqués et couteux dans le cadre desdits premiers moyens 2.

Ces derniers n'ayant qu'à assurer le dernier maillon local de la chaine de transmission qui est peu vulnérable et ne nécessite que la mise en œuvre de moyens techniques simples et économiques. Outre des informations gérées naturellement par un compteur sans qu'il soit tenu compte de l'invention telles que citées dans l'exemple de la figure 3, la connectivité du compteur vers l'amont ouvre des possibilités supplémentaires pour la mise en œuvre de l'invention en ce que le compteur fait fonction de passerelle télécom par l'intermédiaire de laquelle un système d'information peut transmettre des informations au dispositif 1.

La figue 4 donne un premier exemple de compteur électronique communicant 29 qui utilise un premier transmetteur radio bidirectionnel fonctionnant à des fréquences autorisées pour la télérelève des index de comptage par une infrastructure de réseau 27. Un second transmetteur radio à courte portée conforme à un standard tel que « ZigBee », « KNX », « Z-Wave », « Thread », « WiFi », « Bluetooth » etc. est mis en œuvre pour la transmission de données utilisables localement par le client. Il est aussi donné un second exemple de compteur électronique communicant 30 utilisant un transmetteur CPL bidirectionnel, mettant en œuvre par exemple un protocole standard tel que « CLP G3 », « PRIME » etc. à des fréquences autorisées pour la télérelève des index de comptage, et le cas échant pour agir à distance sur des paramètres ou sur des actionneurs en lien avec le contrat de fourniture, par une infrastructure de réseau 28. Le compteur 30 dispose d'une interface pour établir une liaison filaire unidirectionnelle sortante dite « Télé-information client » pour transmettre des données utilisables par un appareil tiers compatible. Les premiers moyens (2) pour recevoir des données sont dans ce cas une interface apte à recevoir, démoduler et décoder le signal transmis par la liaison filaire. Il est aussi prévu d'équiper le compteur 30 d'une mini-passerelle optionnelle permettant l'établissement d'une liaison radio à courte portée avec le dispositif 1 pour faciliter l'installation des appareils, lesdits premiers moyens 2 sont alors un récepteur radio conforme au standard mis en œuvre dans la passerelle comme ceux cités précédemment dans le cas du compteur 29.

La figure **5** illustre la combinaison : CPL point à point et diffusion CPL.

Dans cette variante de mise en œuvre de l'invention, lesdits premiers moyens 2 matériels et/ou logiciels pour recevoir des données dites de configuration **sont un modem** CPL bidirectionnel et un sous-ensemble logiciel appelé « pile protocolaire » mettant en œuvre un standard de communication, par exemple « CLP G3 » ou « PRIME », lesdits premiers moyens étant aptes à recevoir des données dans le cadre d'une liaison point à point depuis une infrastructure de réseau appropriée 28. Il s'agit par exemple d'une infrastructure basée sur des concentrateurs CPL compatibles installés à proximité de grappes de récepteurs à portée de réception, relayée ou directe, selon que le protocole de communication est maillé ou non. Lesdits concentrateurs étant connectés au système d'information assurant la gestion et la supervision des ressources par l'intermédiaire d'un réseau de télécommunication cellulaire de génération dite « 2,5G » ou postérieure. Comme dans l'exemple de la figure 4, lesdits seconds moyens 3 sont aptes à recevoir des données diffusées par CPL au moyen d'une infrastructure de réseau appropriée 22, du type « basse-fréquence large-étendue » ou du type « haut-fréquence haut-débit ». Lesdits premiers et seconds moyens pour recevoir des données ainsi que le sous-ensemble d'alimentation basse-tension 12 sont connectés à la même source d'énergie 13 qui dans cet exemple est naturellement le réseau électrique car ce dernier est aussi la source des données de configuration et la source des données diffusées. Dans une variante de mise en œuvre particulièrement avantageuse, il est prévu que lesdits premiers et seconds moyens 2, 3 pour recevoir des données partagent tout ou partie des moyens matériels, voire aussi tout ou partie des moyens logiciels mis en œuvre pour recevoir des données par CPL dans le cadre d'une liaison point à point et dans le cadre d'une diffusion simultanée à une pluralité de dispositifs 1. Il est prévu des variantes dans lesquelles les deux modalités de réception sont mises en œuvre par deux modalités de fonctionnement ou deux « profils » différents d'un même standard, d'autres variantes exécutent en parallèle deux piles protocolaires distinctes, chacune étant optimisée pour une modalité de transmission. Par exemple la pile protocolaire assurant les transmissions de données en point à point, qui n'est pas sous contrainte de temps réel, utilise une modulation privilégiant le débit binaire et le cas échéant met en œuvre un maillage permettant à chaque point de relayer les données qu'il reçoit vers d'autres points qui ne sont pas à la portée directe d'un émetteur amont. A l'inverse, la pile protocolaire assurant la diffusion simultanée des données met en œuvre des options techniques privilégiant la portée directe sur le débit binaire. Des circuits intégrés comme le système sur une puce « STCOM » de STMicroelectronics (marques déposées), qui comprend un bloc fonctionnel modem CPL programmable, sont configurables « à la volée » pour pouvoir passer de manière dynamique d'un mode de fonctionnement optimisé pour des liaisons point à point et à un mode de diffusion optimisé pour la diffusion simultanée de données. Des systèmes sur une puce comme par exemple l'ATSAM4CP16C d'ATMEL (marques déposées) sont aptes à mettre en œuvre l'invention avec un seul circuit intégré numérique comprenant lesdits premiers moyens 2 pour recevoir des données sous la forme d'un bloc fonctionnel modem au standard « CPL G3 », lesdits seconds moyens 3 pour recevoir des données diffusées sous la forme d'un bloc fonctionnel récepteur TCFM numérique utilisant le convertisseur analogique-numérique intégré et des composant logiciels de traitement du signal exécutés par le microprocesseur embarqué associé au convertisseur, et l'au moins un sous-ensemble de traitement numérique 4 mettant en œuvre le procédé selon l'invention utilisant le microprocesseur associé au convertisseur et/ou l'autre microprocesseur compris dans ce composant.

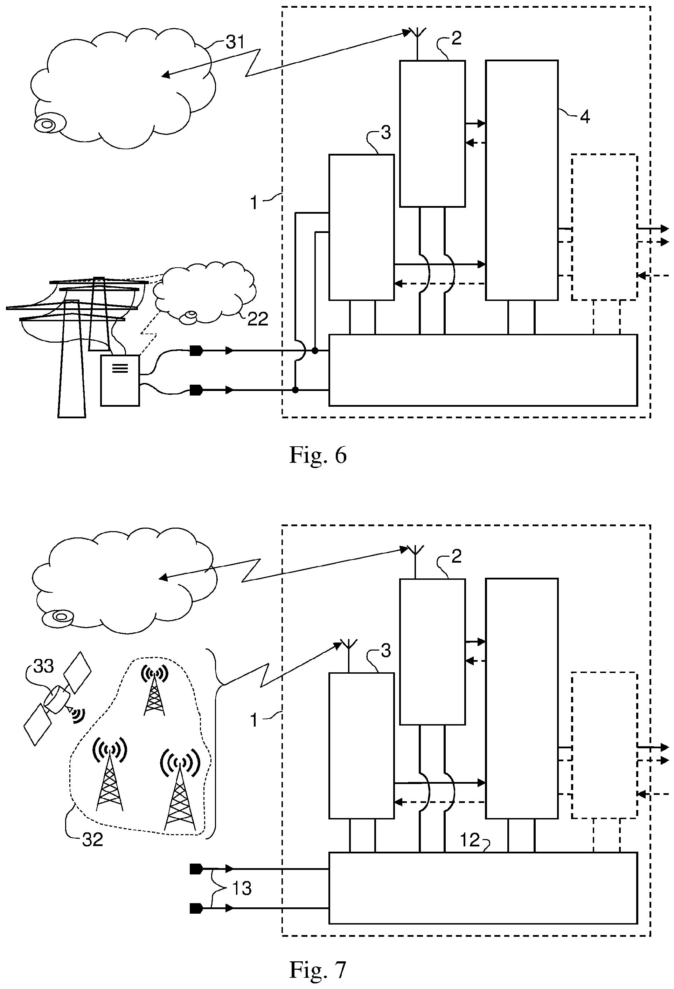

La figure **6** illustre la combinaison : radio point à point et diffusion CPL.

Dans cette variante de mise en œuvre de l'invention, lesdits premiers moyens 2 matériels et/ou logiciels du dispositif 1 pour recevoir des données dites de configuration sont des moyens radiofréquences pour établir une liaison point à point avec une infrastructure de télécommunication 31, par exemple un sous-ensemble de transmission radio compatible avec les standards à « faible-puissance large-étendue » NB-IoT et/ou Sigfox et/ou Lora ou encore un modem prévu pour effectuer des transmissions de données par radio en se connectant à un réseau cellulaire de génération dite « 2,5G » ou postérieure. Comme dans l'exemple illustré par la figure 5, lesdits seconds moyens 3 sont aptes à recevoir des données diffusées par CPL au moyen d'une infrastructure de réseau appropriée 22, du type « basse-fréquence large-étendue » ou du type « haute-fréquence haut-débit ». Des systèmes sur une puce tels que cités précédemment peuvent aisément mettre en œuvre cette variante de l'invention avec un seul circuit intégré numérique très intégré à faible coût. Ceci en particulier si les moyens 3 et 4 sont utilisés pour mettre en œuvre un récepteur TCFM numérique.

La figure **7** illustre la combinaison : radio point à point et réseau de diffusion.

Cette variante de mise en œuvre de l'invention diffère de celle de la figure 6 en ce que lesdits seconds moyens 3 du dispositif 1 sont aptes à recevoir des données diffusées par radio au moyen d'une infrastructure terrestre 32 ou satellitaire 33 appropriée.

Il s'agit par exemple de recevoir selon l'invention des données diffusées en utilisant des services annexes de diffusion de données proposés par des réseaux de diffusion terrestre ou satellitaire de la radio et/ou de la télévision numérique. Par exemple des réseaux de diffusion satellitaire de la radio numérique comme celui de la société « XM Sirius » aux Etats-Unis d'Amérique sont particulièrement appropriés en ce que les moyens nécessaires pour recevoir et décoder le signal diffusé sont simples et économiques à mettre en œuvre, de plus ils ne requièrent que des antennes de petite dimension et ils peuvent être embarqués dans des moyens de transport. Il est aussi prévu d'utiliser des services de transmission de données associés à des réseaux de diffusion terrestre ou satellitaire de la radio et/ou de la télévision analogique comme par exemple respectivement le « RDS » ou le « Télétexte » dans les pays où ces solutions mixtes numériques sur réseaux analogiques sont encore utilisées. Ceci est possible compte tenu du peu de bande passante nécessaire à la mise en œuvre de l'invention. Cette variante de l'invention ne mettant en œuvre que des moyens de réception peu consommateurs d'énergie, et bien qu'il soit toujours possible d'utiliser le réseau électrique comme source d'énergie 13 du dispositif 1, il est aussi prévu que la source d'énergie 13 alimentant le sous-ensemble d'alimentation 12 soit un réseau d'alimentation véhiculaire dans les utilisations embarquées, une batterie dans les utilisation mobiles, ou des générateurs d'énergie électrique exploitant l'énergie solaire ou mécanique pouvant être captée et convertie dans l'environnement du dispositif.

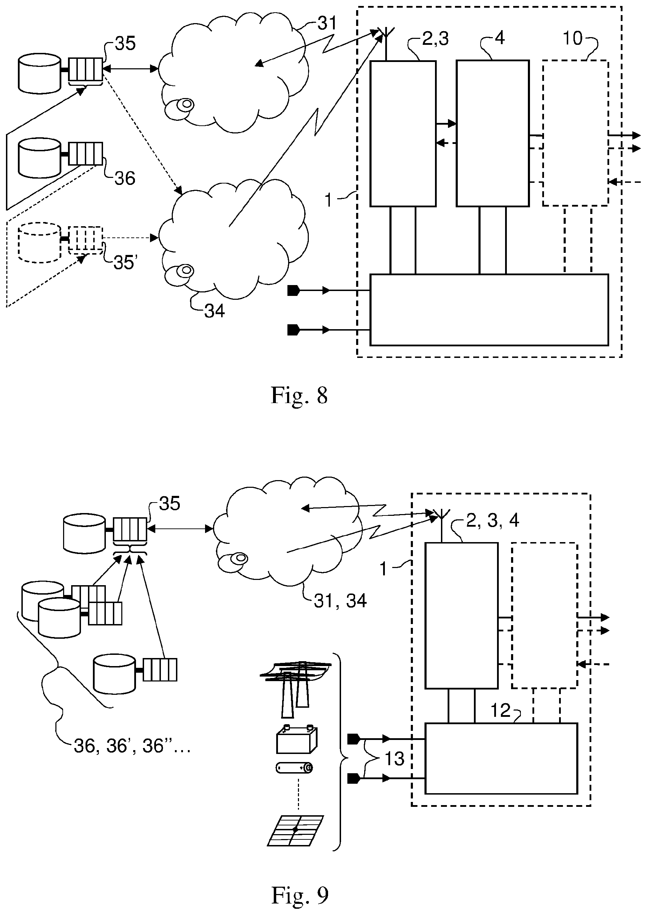

La figure **8** illustre la combinaison : radio bimodale point à point et diffusion.

Cette variante de mise en œuvre de l'invention met en œuvre les mêmes moyens matériels dans le cadre desdits moyens pour recevoir des données 2 et 3 du dispositif 1. Les deux modalités de réception de données, en point à point et par diffusion, selon l'invention étant mises en œuvre par deux modalités de fonctionnement ou deux « profils » différents d'un même standard de communication numérique par radio, d'autres variantes exécutant en parallèle deux piles protocolaires distinctes, chacune étant optimisée pour une modalité de transmission. Cet exemple de mise en œuvre de l'invention s'appuie sur deux infrastructures de réseau au moins partiellement séparées pour transmettre les données par des liaisons point à point et par diffusion. Les réseaux de télécommunication par radio 31 et 34, respectivement utilisées pour transmettre les données en point à point et par diffusion, sont pilotés par un système d'information 35, et le cas échéant 35', ceci en particulier lorsque les deux systèmes d'information « réseaux » sont gérés par deux opérateurs différents. Un système d'information, dit « métier » 36, qui est généralement géré par un opérateur spécialisé, par exemple pour l'exploitation, la gestion ou la supervision d'un réseau électrique, transmet des objectifs à atteindre à au moins un système d'information dit « réseau » 35 et/ou 35'. Un objectif « métier » est par exemple un besoin immédiat d'effacement de consommations électriques pour un total de 500 KW dans une partie du réseau électrique. L'au moins un système d'information dit « réseau » traduit chaque objectif « métier » à atteindre reçu en autant de transmissions de données selon l'invention que nécessaire à destination des dispositifs 1 pertinents en fonction de l'objectif à atteindre. Dans cet exemple, chaque dispositif 1 selon l'invention contrôle l'accès à la puissance électrique d'une ou de plusieurs charges dont la puissance unitaire ou cumulée pour un client donné est connue dans une base de données d'au moins un système d'information mis en œuvre. Des systèmes sur une puce comme par exemple le composant « subGHz SoC » développé par l'organisation IMEC ou des composants similaires tels que le « SX1272 » de SEMTECH (marque déposée) sont aptes à recevoir les données transmises par radio selon les deux modalités de l'invention avec un seul circuit intégré numérique intégrant les blocs fonctionnels 2, 3 d'un dispositif 1 selon l'invention. Le même composant étant en effet apte à recevoir des données dans le cadre d'une liaison radio point à point par exemple selon les standards NB-IOT, Sigfox, LoRa ou équivalents, et apte à recevoir des données diffusées par radio aux fréquences et aux modulations appropriées en fonction de la zone géographique d'utilisation et apte à mettre en œuvre le procédé selon l'invention. Un microcontrôleur ou un système sur une puce multiprocesseur dont la puissance de calcul et les ressources embarquées dépendent des piles protocolaires retenues et des besoins propres à l'utilisation des données, forme l'unité de traitement numérique 4.

Le cas échéant, des moyens 10 pour utiliser des données reçues complètent le transmetteur radio 2, 3 et l'unité de traitement 4 pour former cette variante du dispositif 1.

La figure **9** illustre une variante optimisée de combinaison radio bimodale.

Cette variante de mise en œuvre de l'invention se distingue de celle de la figure 8 en ce qu'elle est davantage optimisée sur le plan de la compacité, de la consommation énergétique et du coût de mise en œuvre et de la facilité d'exploitation. Cet exemple d'optimisation poussée de tous les aspects d'un système selon l'invention repose sur une infrastructure de réseau unique pour les deux modalités de transmission qui comprend un réseau de télécommunication commun 31, 34, un système d'information « réseau » commun 35, 35' géré par un opérateur télécom unique qui propose des services réseau à un ou plusieurs operateur « métier » 36, 36', 36" etc. dont les systèmes d'information spécialisés respectifs transmettent des objectifs au système d'information « réseau » de l'opérateur télécom. Cet exemple d'optimisation poussée de la mise en œuvre de l'invention concerne aussi les dispositifs 1. L'ensemble des fonctions numériques et la majeure partie du frontal analogique des moyens de réception communs sont intégrés dans un système sur une puce comprenant les blocs fonctionnels 2, 3 et 4 selon l'invention. Ce composant étant avantageusement réalisé dans une technologie à très faible consommation électrique de sorte à pouvoir l'alimenter si nécessaire par une source d'énergie 13 autonome ou produite par l'environnement. Bien entendu une alimentation par le réseau électrique restant possible pour les applications de gestion de l'énergie électrique qui nécessite par ailleurs une connexion au réseau électrique. Il est en effet avantageux de réduire les consommations propres des systèmes et donc leurs couts d'exploitation, même dans les cas où l'énergie électrique est disponible en abondance. Il est prévu dans le cas des variantes de mise en œuvre de l'invention où l'utilisation des données requiert peu ou pas de puissance, que le bloc fonctionnel 10, voire le sous-ensemble d'alimentation basse tension 12 soient aussi intégrés dans un système sur une puce unique. Des systèmes sur une puce de dernière génération comme par exemple le composant « subGHz SoC » développé intégralement en technologie CMOS y compris le frontal radio, par l'organisation IMEC, et des composants commerciaux similaires sont aptes à mettre en œuvre l'invention entièrement par radio avec un seul circuit intégré numérique intégrant tous les blocs fonctionnels d'un dispositif 1 selon l'invention. Cette variante est particulièrement appropriée pour la mise en œuvre des standards de communication par radio à faible puissance NB-IOT, Sigfox, LoRa ou équivalents, et à la réception des données diffusées par radio aux fréquences et aux modulations appropriées en fonction de la zone géographique d'utilisation, par exemple le cas échéant, selon une modalité de transmission ou selon un profil dédié à la diffusion des données dans les standards « LPWA » cités précédemment.

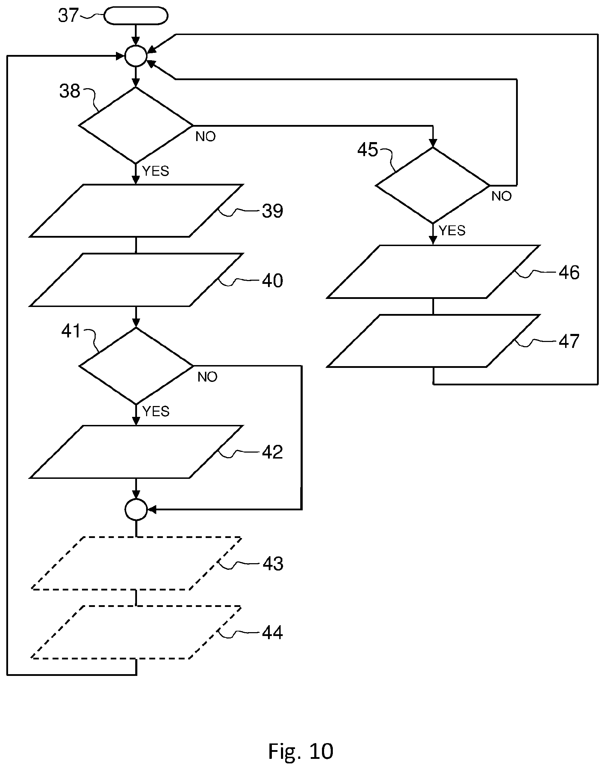

La figure **10** illustre le procédé de réception sélective des données diffusées. Cet exemple de mise en œuvre du procédé selon l'invention sous la forme d'un organigramme de programmation commence par l'étape 37 d'initialisation des variables et de paramétrage des composants matériels du dispositif. Le dispositif est continument en attente de la réception d'un message par lesdits premiers moyens ou par lesdits seconds moyens pour recevoir des données.

Un résultat positif au test 38 signifie qu'un message diffusé a été reçu par le dispositif. Le traitement 39 est exécuté pour extraire les données qui déterminent la sélectivité de la diffusion dans les données reçues qui sont stockées dans une mémoire tampon de réception. Ensuite le traitement 40 est exécuté pour traiter les données extraites à l'étape 39 pour déterminer dans le test 41 si le dispositif doit utiliser ou ignorer les données de nature applicative contenues dans le message diffusé reçu. Le test 41 est réalisé sur le résultat du traitement 39 en fonction des données reçues qui déterminent la sélectivité de la diffusion et de tout ou partie de l'au moins une donnée de configuration et/ou de l'au moins un identifiant d'émetteur de diffusion ayant été préalablement stocké dans l'au moins une mémoire du dispositif. Par exemple, le message diffusé reçu comprend :
- des données pour coder une commande applicative associée au message, par exemple une commande de stockage d'énergie, complétée le cas échéant par une information additionnelle précisant un objectif de quantité d'énergie de par exemple 2 KWh pour chaque dispositif utilisateur;
- une information déterminant la sélectivité de la diffusion par prise en compte d'au moins une donnée de configuration préalablement mémorisée à prendre en compte dans un ou plusieurs tests d'identité à réaliser avec des données diffusées reçues de même nature. Par exemple un code signifiant qu'un test d'identité doit être fait seulement sur le critère du numéro de groupe affecté à chacun des dispositifs, complété le cas échéant par une information additionnelle précisant un ou plusieurs numéros de groupe destinataires, par exemple les groupes destinataires 8 ou 13 ou 15;

Le traitement 39 calcule si l'ensemble des conditions d'utilisation des données applicatives sont satisfaites ou non, c'est-à-dire si l'état logique de la fonction combinatoire résultante de la prise en compte de tous les tests unitaires requis est vrai ou faux. L'état logique de la fonction combinatoire résultante est testé à l'étape 41. Dans cet exemple simple, tous les dispositifs qui reçoivent physiquement le message diffusé dont le numéro de groupe associé stocké dans leur mémoire est 8 ou 13 ou 15, activent la charge de puissance qu'ils pilotent et gèrent localement l'arrêt du stockage d'énergie lorsque la consigne de 2 KWh est atteinte, ceci se faisant dans le cadre d'un programme applicatif d'utilisation des données reçues 42 dont le contenu est externe à l'invention proprement dite. L'invention permet au système d'information de déterminer des combinaisons des plus simples aux plus sophistiquées pour pouvoir obtenir la sélectivité de la diffusion nécessaire à l'atteinte d'un objectif global donné. Par exemple, l'information déterminant la sélectivité de la diffusion d'une commande d'effacement de consommation peut être un code signifiant qu'un test d'identité doit être fait sur le critère d'appartenance à un départ de poste source donné ET sur le critère d'appartenance à la catégorie d'utilisateur résidentiels ET sur la catégorie d'usage de l'électricité chauffage électrique. Des raffinements tels que des conditions d'exclusion sont aussi prévues lorsqu'il est plus efficace de déterminer la sélectivité recherchée en appliquant un opérateur logique de type négation sur un critère donné pour que les dispositifs utilisent par défaut les données applicatives reçues sauf les dispositifs pour lesquels le résultat du test sur le critère est vrai. Il est prévu d'utiliser tous les fonctions logiques élémentaires de l'algèbre de Boole, seules ou en combinaison, sur tout type de critère y compris des résultats de calculs numériques, réalisés sur des données préalablement mémorisées par le dispositif, dont des identifiants d'émetteurs de diffusion le cas échéant. Ceci pour affiner la sélectivité de la diffusion selon l'invention autant que nécessaire dans la limite de la charge utile de données pouvant être transportée dans un message. Il est aussi prévu de mettre en œuvre l'invention en diffusant une pluralité de messages en séquence lorsque la capacité de transport unitaire d'un message est insuffisante pour transporter l'ensemble des données nécessaires à la mise en œuvre de l'invention. Dans ce cas, il est prévu de coder dans le message qu'il s'agit d'une diffusion en plusieurs messages ainsi qu'une numérotation des messages pour que les dispositifs puissent réassembler et traiter convenablement les informations reçues en séquence.

Si au cours du test 41 il est déterminé que des données applicatives reçues doivent être utilisées par le dispositif, on sort par la branche positive, et les données de nature applicative reçues dans le message unique ou dans les messages multiples diffusés sont utilisées par le dispositif dans le cadre du traitement 42 dont le contenu ne rentre pas dans le cadre de l'invention.

Le cas échéant, si ce raffinement de l'invention est mis en œuvre, que le dispositif utilise ou ignore les données applicatives reçues, les données reçues dans le message qui identifient l'émetteur, la station de base ou l'antenne qui l'a diffusé, sont extraites à l'étape 43. Si nécessaire, les données d'identification d'émetteur de diffusion reçues sont traitées pour être rendues plus compactes, par exemple en les transformant par une fonction de hachage appropriée, elles sont stockées dans une mémoire du dispositif selon l'invention à l'étape 44. Des raffinements sont prévus pour ne stocker les identifiants d'émetteurs que la première fois qu'ils sont reçus par le dispositif. Il est également prévu de prendre en compte les disparitions d'émetteur dans l'infrastructure, ce qu'une simple mémorisation additive dans les dispositifs ne permettrait pas. Ceci se fait par exemple par une réinitialisation périodique du contenu de la mémoire d'enregistrement des identifiants d'émetteurs de diffusion ou sur réception d'un message spécifique.

Un résultat positif au test 45 signifie qu'un message transmis dans le cadre d'une liaison point à point a été reçu par le dispositif. Dans ce cas, tout ou partie des données de configuration sont extraites des données reçues à l'étape 46 et sont stockées dans une mémoire du dispositif à l'étape 47.

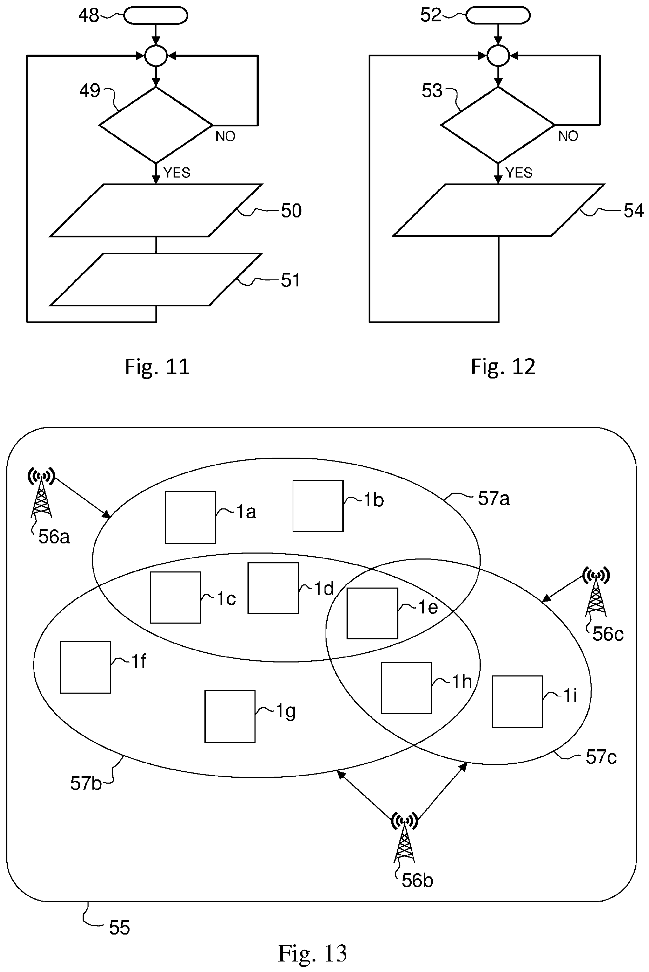

La figure **11** illustre le procédé de diffusion sélective des données sur objectif. Cette partie du procédé selon l'invention est mise en œuvre dans le système d'information associé au réseau de télécommunication assurant la diffusion sélective des données. Après l'initialisation de cette partie du procédé à l'étape 48, le test 49 est continument exécuté pour détecter un événement nécessitant une diffusion sélective d'information dans le réseau de télécommunication. De tels événement sont par exemple la réception d'une demande transmise par un système d'information « métier » associé, par exemple par le système d'information d'un gestionnaire de réseau électrique ou d'un agrégateur nécessitant l'effacement, la consommation ou le stockage, urgent d'une quantité cumulée de puissance ou d'énergie déterminée à un endroit déterminé du réseau électrique. La quantité cumulée de puissance ou d'énergie nécessitant l'agrégation de puissances ou d'énergies diffuses contrôlées par une pluralité de dispositifs selon l'invention auxquels il s'agit de diffuser le message approprié pour atteindre l'objectif opérationnel visé, ou pour s'en approcher au plus près dans les limites de la résolution de la maitrise de la sélectivité de la diffusion des données selon l'invention. En cas de sortie positive au test de l'étape 49, un ou plusieurs traitements sont effectués à l'étape 50 pour déterminer la ou les diffusions d'informations à réaliser et les émetteurs du réseau de télécommunication à utiliser pour atteindre l'objectif opérationnel visé en fonction d'informations sur les dispositifs selon l'invention à qui diffuser un ou plusieurs messages et en fonction d'informations sur les émetteurs du réseau de télécommunication. Ces informations sont préalablement connues du système d'information « réseau » et sont stockées dans au moins une base de données interrogeable au cours de l'au moins un traitement de l'étape 50. L'étape 50 comprend par exemple des traitements de simulation itératifs pour optimiser l'utilisation des ressources du système selon l'invention pour se rapprocher au plus près de l'objectif visé. L'au moins une base de données est continument mise à jour par le système d'information à partir, par exemple, d'informations de configuration des dispositifs selon l'invention et/ou d'informations relatives à des caractéristiques techniques ou non techniques des moyens diffus contrôlés par les dispositifs. Les caractéristiques techniques sont par exemple des puissances électriques unitaires de charges ou de générateurs associés à un dispositif donné, l'état et/ou les capacités résiduelles de capacités de stockage d'énergie etc. Les caractéristiques non techniques sont par exemple les caractéristiques d'un service auquel a souscrit la personne physique ou morale à laquelle est rattaché un dispositif selon l'invention. Lesdites informations sur les émetteurs du réseau de télécommunication sont par exemple des informations liées à la couverture géographique de chaque émetteur, une adresse IP d'émetteur, de station de base, concentrateur ou d'antenne dans le réseau etc.

Le contenu et les modalités de la diffusion de l'au moins un message qui ont été déterminés par le système d'information à l'étape 50 sont suivis par la diffusion effective à l'étape 51 de l'au moins un message par les moyens d'émission appropriés sélectionnés par le système d'information « réseau ». A cette étape qui termine l'exécution de cette partie du procédé est aussi prévue la réinitialisation de la signalisation de l'évènement ayant lancé l'exécution pour n'avoir qu'une seule exécution des traitements par évènement.

La figure **12** illustre le procédé de mise à jour de la base de données réseau.

Cette partie du procédé selon l'invention est mise en œuvre dans les dispositifs selon l'invention qui comprennent en outre des moyens pour transmettre des données à un système d'information distant. Après l'initialisation de cette partie du procédé à l'étape 52, le test 53 est continument exécuté pour détecter un événement nécessitant la transmission au système d'information « réseau » d'au moins une donnée de configuration. De tels événements sont par exemple la réinitialisation matérielle du dispositif selon l'invention (« reset » en langue anglaise), un changement de la valeur d'une donnée de configuration, la réception d'un nouvel identifiant d'émetteur, la réception par lesdits premiers moyens ou par lesdits seconds moyens d'un message de demande de transmission d'au moins une donnée de configuration. La transmission d'au moins un message en réponse à l'évènement déclencheur est réalisée à l'étape 54. Les moyens utilisés pour transmettre l'au moins un message sont par exemple des moyens d'émission associées auxdits premiers moyens pour recevoir des données dans le cadre d'une liaison point à point, la liaison étant dans ce cas bidirectionnelle. A cette étape qui termine l'exécution de cette partie du procédé est aussi prévue la réinitialisation de la signalisation de l'évènement ayant lancé l'exécution pour n'avoir qu'une seule exécution des traitements par évènement.

La figure **13** illustre la sélectivité en fonction des émetteurs de diffusion.

Cette figure illustre la mise en œuvre d'un réseau de diffusion de données par radio 55 déployé sur un territoire donné. Il est à noter que bien que la figure 13 représente un réseau de télécommunication ou de diffusion sans fil, l'illustration convient aussi à la diffusion de messages par CPL dans un réseau filaire. Dans cet exemple, le territoire couvert comprend 3 émetteurs 56a, 56b et 56c dont la portée permet de diffuser des données à tous les dispositifs selon l'invention 1a à 1i. Bien entendu un aussi petit nombre de dispositifs n'a de sens que pour faciliter la compréhension de l'invention, cette dernière n'est avantageuse par rapport aux solutions d'adressage classiques que pour adresser simultanément et de manière sélective des grandes quantités de dispositifs, par exemple des centaines, voire des milliers ou encore davantage. La répartition des émetteurs dépend de contraintes telles que leur portée physique en espace libre et en environnement urbain s'il s'agit de radio, les lobes des antennes, la présence d'obstacles à la propagation des ondes, la présence d'un trafic important ou de sources de bruit dans la bande de fréquence utile susceptible de réduire les capacités de transmission du réseau, en fonction du nombre et de la densité de récepteurs à desservir etc. S'il s'agit de courants porteurs, les contraintes sont par exemple la topologie du réseau électrique qui matérialise l'espace de communication, la présence de charges à très faible impédance affaiblissant le signal ou de sources de bruit susceptibles de perturber les communications.

Dans cet exemple, l'émetteur 56a couvre la zone de territoire 57a, l'émetteur 56b couvre les zones de territoire 57b et 57c, et l'émetteur 56c couvre la zone de territoire 57c.

Le système d'information du réseau pilote les émetteurs, avantageusement par des communications basées sur des adresses IP, pour activer les émetteurs concernées par l'atteinte d'un objectif de sélectivité dans la diffusion d'un ou de plusieurs messages. Par exemple pour que chacun des émetteurs impliqués diffuse en séquence plusieurs messages qui par exemple ne différent que par l'identifiant d'émetteur qu'ils contiennent. Des raffinements tels que des répétitions des émissions au sein d'une même séquence, ou des répétitions d'une séquence d'émissions uniques sont aussi prévues pour augmenter les chances que tous les dispositifs visés aient reçu le message. Tous les récepteurs ont préalablement reçu des messages diffusés par ces émetteurs de sorte qu'ils aient stocké dans une mémoire les identifiants d'émetteurs qu'ils ont déjà reçus au moins une fois, et donc qu'ils sont encore susceptibles de recevoir.

Dans l'exemple de la figure 13, les dispositifs ont stocké préalablement dans leur mémoire les identifiants d'émetteur suivants dont ils ont déjà reçu au moins un message :
1a : ID 56a; 1b : ID 56a; 1c : ID 56a, ID 56b; 1d : ID 56a, ID 56b;
1e : ID 56a, ID 56b, ID 56c; 1f : ID 56b; 1g : ID 56b ; 1h : ID 56b, ID 56c; 1i : ID 56b, ID 56c.

Ainsi par exemple pour diffuser un message dont seuls les dispositifs 1a et 1b doivent utiliser les données, le système d'information du réseau sélectionne les émetteurs ou les stations de base 56a et 56b à qui il fait diffuser en séquence un message qui contient les données à utiliser par les dispositifs visés et une fonction logique combinatoire dont l'état est calculé par les dispositifs en fonction des identifiants d'émetteur qu'ils ont préalablement mémorisés. Ainsi dans cet exemple la fonction logique combinatoire à diffuser est F = (identifiant d'émetteur 56a ET non-identifiant d'émetteur 56b). La fonction logique combinatoire ci-dessus est vraie pour les dispositifs 1a et 1b et fausse pour les dispositifs 1c, 1d, 1e, 1f, 1g, 1h et 1i. L'objectif de la diffusion est atteint. Les dispositifs pour qui cette fonction est vraie utilisent alors les données diffusées reçues, ceux pour qui la fonction est fausse rejettent les données diffusées reçues. Il est à noter que les identifiants d'émetteur qui ne sont pas présent dans la fonction logique combinatoire reçue ne font pas l'objet d'une recherche de présence dans la mémoire du dispositif, ils ne sont pas pris en compte pour la détermination de la sélectivité de la diffusion.

Pour atteindre un objectif de diffusion visant les dispositifs 1c et 1d, la fonction logique combinatoire à diffuser est F = (identifiant d'émetteur 56a ET identifiant d'émetteur 56b ET non-identifiant d'émetteur 56c).

Pour atteindre un objectif de diffusion visant le dispositif 1e, la fonction logique combinatoire à diffuser est F = (identifiant d'émetteur 56a ET identifiant d'émetteur 56b ET identifiant d'émetteur 56c) etc.

Il est à noter que toutes les combinaisons de sélectivité ne sont pas nécessairement possibles en n'utilisant que les identifiants d'émetteur comme seuls critères de prise de décision. Il est avantageusement prévu de les combiner avec des critères en rapport avec l'utilisation des données, c'est à dire en complétant un premier niveau de sélectivité obtenu au moyen des identifiants d'émetteurs par des conditions d'identités entre des données diffusées et des données de configuration propres aux dispositifs selon l'invention qui sont stockés dans une mémoire de ces derniers. Par exemple la sélectivité effective de la diffusion pour atteindre un objectif donné peut être obtenue en diffusant un message qui comprend les données utiles à recevoir par les dispositifs visés, une fonction logique combinatoire conduisant les dispositifs à faire des tests de présence ou non en mémoire d'adresses d'émetteurs données et à des tests d'identité sur des données telles qu'un numéro de groupe, un type de charge contrôlée, un type de contrat de fourniture de service. Il est aussi prévu de réaliser des tests d'état logique, ou d'identité avec une valeur transmise, sur des résultats de calculs faits sur une ou plusieurs donnée de configuration en mémoire, par exemple pour déterminer si un numéro de série unique est un nombre divisible par deux ou par n'importe quel autre nombre transmis dans le message etc. En outre l'invention est particulièrement bien adaptée pour des télécommandes à faible temps de latence de grandes quantités de récepteurs par des canaux de communication tels que la radio et les CPL qui sont susceptibles de présenter des aléas ponctuels et des variations de leurs zone de couverture au cours du temps. En effet, la plupart des utilisations de l'invention, notamment pour la gestion des réseaux électriques, sont tolérantes sur les plans de la précision et de la fidélité de la sélectivité des diffusions de données. En d'autres termes, une certaine marge d'erreur est permise sur le plan du résultat opérationnel entre l'objectif de sélectivité idéal prédéterminé par le système d'information et l'objectif réellement atteint.

Bien entendu, l'invention n'est pas limitée aux exemples qui viennent d'être décrits et de nombreux aménagements peuvent y être apportés sans sortir du cadre de l'invention, notamment en combinant plusieurs variantes dans le cadre de la même mise en œuvre, en combinant différemment des éléments pris dans plusieurs exemples ou en ordonnançant différemment les étapes du procédé.

## Revendications

1. Dispositif (1) pour recevoir sélectivement des données diffusées simultanément à un sous-ensemble prédéterminé de dispositifs destinataires parmi des quantités massives de récepteurs qui sont aptes à recevoir physiquement les données qui sont diffusées par radio ou par courants porteurs en ligne dans un réseau de télécommunication ou dans un réseau de diffusion de signaux numériques, comprenant :
- au moins un sous-ensemble de traitement numérique (4) comprenant au moins un microprocesseur (5), au moins une mémoire de programme (6);
- un sous-ensemble d'alimentation basse-tension (12) fournissant au moins une tension continue pour alimenter les moyens matériels du dispositif (1), ledit sous-ensemble d'alimentation étant alimenté par au moins une source d'énergie (13);
ledit dispositif (1) étant **caractérisé en ce qu'**il comprend en outre :
- des premiers moyens (2) pour recevoir au moins une donnée de configuration utilisable pour limiter la réception effective des données diffusées aux seuls dispositifs préalablement déterminés, l'au moins une donnée de configuration étant transmise dans le cadre d'une liaison point à point entre au moins un système d'information distant et le dispositif (1);
- des seconds moyens (3) pour recevoir des données diffusées comprenant des données déterminant la sélectivité de la diffusion;
- l'au moins un sous-ensemble de traitement numérique (4) comprenant en outre une interface (7) avec lesdits premiers moyens (2), une interface (8) avec lesdits seconds moyens (3), une interface (9) avec des moyens (10) pour utiliser des données reçues par lesdits seconds moyens (3), au moins une mémoire (11) pour stocker tout ou partie de l'au moins une donnée de configuration ou d'au moins un identifiant d'émetteur de diffusion, au moins un programme (14) pour déterminer si des données diffusées reçues doivent être utilisées ou ignorées par le dispositif (1) en fonction desdites données déterminant la sélectivité de la diffusion, et de tout ou partie de l'au moins une donnée ayant été préalablement stockée dans l'au moins une mémoire (11).

2. Dispositif selon la revendication 1 **caractérisé en ce que** lesdits premiers moyens (2), l'au moins une donnée de configuration, un appareil tiers faisant fonction de passerelle entre un réseau et ledit dispositif pour lui permettre de recevoir indirectement des données, lesdits seconds moyens (3), les données diffusées reçues, l'au moins un sous-ensemble de traitement numérique (4), et l'au moins une source d'énergie (13), sont respectivement :
- un modem radio ou un transmetteur radio bidirectionnel utilisé en récepteur, ou un récepteur radio ou une passerelle réseau utilisant les radiofréquences dans le cadre d'un réseau de télécommunication sans fil local ou étendu, terrestre ou satellitaire, ou un modem à courants porteurs en ligne ou un transmetteur à courants porteurs en ligne bidirectionnel utilisé en récepteur, ou un récepteur à courants porteurs en ligne ou une passerelle réseau utilisant les courants porteurs en ligne, ou une interface pour connecter un câble ou une fibre optique, ou une interface pour recevoir et démoduler des rayons lumineux comprenant une ou plusieurs longueurs d'onde, ou une interface pour recevoir et démoduler un champ magnétique variable, ou une interface pour recevoir et démoduler des signaux sonores;
- un identifiant de groupe, ou un identifiant de poste source, ou un identifiant de départ réseau d'un poste source, ou un identifiant de transformateur moyenne-tension/basse-tension, ou un identifiant de secteur géographique, ou un identifiant de type d'usage de l'électricité, ou un identifiant de catégorie d'appareil, ou un identifiant de fabriquant et de modèle d'appareil ou de version de logiciel enfoui, ou un identifiant de catégorie d'utilisateur, ou un identifiant de catégorie de bâtiment, ou un identifiant d'opérateur de service, ou un identifiant de catégorie de service souscrit;
- un compteur électronique communicant d'énergie électrique, de gaz, d'eau ou de chaleur, ou une mini-passerelle formant une sortie secondaire d'un compteur électronique communicant, ou un système de supervision, ou un émetteur, ou un transmetteur utilisé en émetteur, ou un transpondeur, ou un point d'accès à un réseau local, ou un point d'accès à un réseau étendu;
- un modem ou un transmetteur bidirectionnel utilisé en récepteur, ou un récepteur ou une passerelle réseau utilisant les radiofréquences dans le cadre d'un réseau de télécommunication sans fil terrestre ou satellitaire, ou un récepteur apte à recevoir des données diffusées par des moyens terrestres ou satellitaires, ou un modem ou un transmetteur bidirectionnel utilisé en récepteur, ou un récepteur ou une passerelle réseau utilisant les courants porteurs en ligne, ou un récepteur de télécommande centralisée à fréquence musicale, ou une interface filaire ou sans fil pour connecter un sous-ensemble externe de réception de données diffusées par radio ou par courants porteurs en ligne;
- une commande de mise en marche ou de mise à l'arrêt, ou une commande d'assignation d'une valeur déterminée à un paramètre, ou une commande d'effacement de consommation, ou une commande de stockage d'énergie, ou une commande de délestage de charge, ou une commande de relestage de charge, ou une commande de transport d'informations destinées à un processus applicatif externe à l'invention, ou une commande nulle n'ayant aucun effet en tant que commande, ou une information déterminant la ou les données de configuration préalablement mémorisées à prendre en compte dans un ou plusieurs tests d'identité à réaliser avec des données diffusées reçues de même nature, ou l'expression d'une fonction combinatoire dont les variables d'entrée sont tout ou partie de l'au moins une données de configuration ou tout ou partie de l'au moins un identifiant d'émetteur, ou le résultat d'un calcul portant sur une ou plusieurs données de configuration ou sur un ou plusieurs identifiants d'émetteur ou sur des données additionnelles reçues ou stockées dans une mémoire du dispositif, le résultat de la fonction combinatoire étant un état logique déterminant si l'information reçue doit être utilisée ou ignorée par le dispositif, ou au moins un paramètre en lien avec des données de commande, ou au moins un paramètre en lien avec des données déterminant la sélectivité de la diffusion, ou un identifiant d'émetteur de diffusion;
- au moins un microcontrôleur, ou au moins un système sur une puce, ou au moins une unité de traitement disponible sous la forme d'un circuit imprimé sur lequel sont montés des composants et des connecteurs pour former un module de traitement numérique ayant des caractéristiques techniques standardisées;
- le réseau électrique, ou au moins une cellule photovoltaïque, ou un générateur électrocinétique, ou une batterie, ou une pile électrochimique;

3. Dispositif selon l'une quelconque des revendications 1 ou 2 **caractérisé en ce que** lesdits des premiers (2) et second (3) moyens pour recevoir des données sont des moyens au moins en partie communs, aptes à recevoir des données dans le cadre d'une liaison point à point, et à recevoir des données diffusées.

4. Dispositif selon l'une quelconque des revendications 1 à 3 **caractérisé en ce que** lesdits premiers ou seconds moyens matériels, ou encore les moyens matériels communs pour recevoir des données, comprennent en outre ledit sous-ensemble de traitement numérique (4) ou l'au moins une mémoire (11).

5. Dispositif selon l'une quelconque des revendications 1 à 4 **caractérisé en ce que** lesdits premiers ou seconds moyens, ou encore les moyens communs pour recevoir des données, comprennent en outre des moyens pour transmettre des données à au moins un système d'information distant.

6. Système incluant une pluralité de dispositifs selon les revendications précédentes **caractérisé en ce qu'**il comprend en outre :
- au moins une première infrastructure de réseau pour transmettre des données de configuration aptes à être reçues directement, ou par l'intermédiaire d'au moins un appareil tiers faisant fonction de passerelle, par lesdits premiers moyens (2) d'un dispositif (1);
- au moins une seconde infrastructure de réseau, ou une seconde modalité de fonctionnement de la première infrastructure de réseau, comprenant au moins un émetteur de diffusion pour diffuser par radio ou par courants porteurs en ligne des données aptes à être reçues directement, ou par l'intermédiaire d'au moins un appareil tiers faisant fonction de passerelle, par lesdits seconds moyens (3) des dispositif (1);
- un premier système d'information pour déterminer au moins en partie les données à diffuser par l'au moins une seconde infrastructure de réseau ou par la seconde modalité de fonctionnement de la première infrastructure de réseau pour atteindre un objectif opérationnel prédéterminé.

7. Système selon la revendication 6, **caractérisé en ce que** ledit premier système d'information détermine en outre au moins une donnée de configuration à transmettre par la première infrastructure de réseau à des dispositifs (1) dans le cadre de liaisons point à point.

8. Système selon l'une quelconque des revendications 6 ou 7, **caractérisé en ce qu'**il comprend en outre au moins un second système d'information, spécialisé dans un domaine d'utilisation et apte à transmettre audit premier système d'information ledit objectif opérationnel prédéterminé à atteindre.

9. Système selon l'une quelconque des revendications 6 à 8, **caractérisé en ce que** ledit objectif opérationnel à atteindre est en rapport direct ou indirect avec une quantité cumulée de puissance ou d'énergie électrique, à effacer ou à consommer ou à stocker ou à restituer sur un territoire géographique prédéterminé ou dans une partie prédéterminée d'un réseau de distribution d'électricité.

10. Système selon l'une quelconque des revendications 6 à 9, **caractérisé en ce que** ledit objectif opérationnel à atteindre est en rapport direct ou indirect avec la synchronisation d'au moins une action dans une pluralité dispositifs (1) ou pour gérer ou pour administrer un parc de dispositifs (1).

11. Procédé mis en œuvre par des moyens matériels ou logiciels dans un dispositif selon l'une quelconque des revendications 1 à 5 pour recevoir sélectivement des données diffusées dans un réseau de télécommunication ou dans un réseau de diffusion de signaux numériques, le procédé étant **caractérisé en ce qu'**il comprend les étapes :
- de réception de données diffusées, par lesdits seconds moyens pour recevoir des données dudit dispositif;
- de traitement portant sur tout ou partie desdites données diffusées reçues et sur tout ou partie de données ayant été préalablement reçues par lesdits premiers moyens ou par lesdits seconds moyens pour recevoir des données dudit dispositif;
- de détermination si des données diffusées reçues doivent être utilisées ou ignorées par ledit dispositif en fonction du résultat dudit traitement.

12. Procédé selon la revendication 11 **caractérisé en ce qu'**il comprend en outre les étapes :
- de réception d'au moins une donnée de configuration par lesdits premiers moyens dudit dispositif dans le cadre d'une liaison point à point avec l'au moins un système d'information distant;
- d'écriture dans l'au moins une mémoire dudit dispositif de tout ou partie de l'au moins une donnée de configuration reçue.

13. Procédé selon l'une quelconque des revendications 11 ou 12 **caractérisé en ce qu'**il comprend en outre les étapes :
- d'extraction d'un identifiant de l'émetteur de diffusion dans les données diffusées reçues;
- d'écriture dans l'au moins une mémoire (11) du dispositif (1) d'un identifiant biunivoque de l'émetteur de diffusion.

14. Procédé selon l'une quelconque des revendications 11 à 13 **caractérisé en ce qu'**il comprend en outre une étape de transmission par le dispositif (1) à un système d'information distant, d'au moins une donnée de configuration ou d'au moins un identifiant biunivoque d'émetteur de diffusion dont le dispositif reçoit les messages, à l'occasion d'un évènement déclencheur;

15. Procédé selon l'une quelconque des revendications 11 à 14 **caractérisé en ce qu'**il comprend en outre les étapes :
- de prise en compte par un système d'information d'un objectif opérationnel à atteindre par la diffusion sélective d'au moins un message;
- d'élaboration par ledit système d'information du contenu de l'au moins un message à diffuser, en fonction de l'action à accomplir par les dispositifs utilisateurs de données diffusées reçues et de la sélectivité de la diffusion nécessaire à l'atteinte de l'objectif opérationnel, tout ou partie dudit contenu étant élaboré à partir de données stockées dans au moins une base de données à laquelle ledit système d'information peut accéder au moins en lecture;
- de diffusion d'au moins un message dans le réseau par au moins un émetteur de diffusion sélectionné par le système d'information pour déterminer un premier niveau de sélectivité de la diffusion basé sur la maitrise de la couverture de l'au moins un émetteur sélectionné.

16. Procédé selon la revendication 15 **caractérisé en ce qu'**il comprend en outre une étape de prise en compte par ledit système d'information d'un retour d'information sur l'effet obtenu par la diffusion sélective de l'au moins un message pour répéter les étapes de la revendication 15 avec un nouvel objectif opérationnel visant à annuler l'écart entre l'effet objectif et l'effet obtenu, ou jusqu'à ce que ledit écart soit considéré comme étant négligeable.

17. Utilisation du procédé selon l'une quelconque des revendications 11 à 16 pour équilibrer la production et la consommation d'électricité dans un réseau électrique, ou pour protéger son intégrité, en agissant à distance à la baisse ou à la hausse sur la consommation d'une pluralité de charges de puissance diffuses contrôlées directement ou indirectement par des dispositifs aptes à recevoir sélectivement des données diffusées par radio ou par courants porteurs en ligne dans un réseau de télécommunication ou dans un réseau de diffusion de signaux numériques.

18. Utilisation du procédé selon l'une quelconque des revendications 11 à 16 pour synchroniser une ou plusieurs actions impliquant une pluralité dispositifs aptes à recevoir sélectivement des données diffusées par radio ou par courants porteurs en ligne dans un réseau de télécommunication ou dans un réseau de diffusion de signaux numériques, ou pour gérer, ou pour administrer un parc de tels dispositifs ou un parc d'appareils externes connectés à de tels dispositifs.

## Patentansprüche

1. Vorrichtung (1) zum selektiven Empfang von Daten, die gleichzeitig an eine vorbestimmte Untergruppe von Zielvorrichtungen aus der großen Menge an Empfängern übermittelt werden, die physisch in der Lage sind, die über Funk oder Online-Trägerstrom in einem Telekommunikationsnetz oder einem Netzwerk zur Übermittlung digitaler Signale übermittelten Daten zu empfangen, die Folgendes umfasst:
- mindestens eine Unterbaugruppe für die digitale Verarbeitung (4), die mindestens einen Mikroprozessor (5) und mindestens einen Programmspeicher (6) umfasst;
- eine Unterbaugruppe für die Niederspannungsversorgung (12), die mindestens eine Gleichspannung zur Versorgung der Hardware-Mittel der Vorrichtung (1) liefert, wobei die genannte Unterbaugruppe für die Spannungsversorgung über mindestens eine Energiequelle (13) versorgt wird;
wobei die genannte Vorrichtung (1) weiterhin **dadurch gekennzeichnet ist, dass** sie Folgendes umfasst:
- erste Mittel (2) zum Empfang mindestens einer Konfigurationsangabe, die zur Einschränkung des tatsächlichen Empfangs der übermittelten Daten einzig auf die vorausgehend bestimmten Vorrichtungen verwendet werden kann, wobei die mindestens eine Konfigurationsangabe im Rahmen einer Punkt-zu-Punkt-Verbindung zwischen mindestens einem entfernten Informationssystem und der Vorrichtung (1) übertragen wird;
- zweite Mittel (3) zum Empfang der gesendeten Daten, die Daten umfassen, die die Selektivität der Übermittlung bestimmen;
- die mindestens eine Unterbaugruppe für die digitale Verarbeitung (4), die ferner eine Schnittstelle (7) zu den genannten ersten Mitteln (2), eine Schnittstelle (8) zu den genannten zweiten Mitteln (3), eine Schnittstelle (9) zu den Mitteln (10) zur Nutzung der von den genannten zweiten Mitteln (3) empfangenen Daten, mindestens einen Speicher (11) zum Speichern der gesamten oder eines Teils der mindestens einen Konfigurationsangabe oder mindestens einer Kennung des Senders zur Übermittlung und mindestens ein Programm (14) zur Bestimmung in Abhängigkeit von den genannten Daten, die die Selektivität der Übermittlung bestimmen und der gesamten oder eines Teils der mindestens einen Angabe umfasst, die vorausgehend in dem mindestens einen Speicher (11) abgelegt wurde, ob die empfangenen übermittelten Daten von der Vorrichtung (1) genutzt oder ignoriert werden sollen.

2. Vorrichtung nach Anspruch 1, die **dadurch gekennzeichnet ist, dass** die genannten ersten Mittel (2), die mindestens eine Konfigurationsangabe, ein Fremdgerät, das als Gateway zwischen einem Netzwerk und der genannten Vorrichtung fungiert, um ihr einen indirekten Datenempfang zu ermöglichen, die genannten zweiten Mittel (3), die empfangenen übermittelten Daten, die mindestens eine Unterbaugruppe für die digitale Verarbeitung (4) und die mindestens eine Energiequelle (13) jeweils Folgendes sind:
- ein Funkmodem oder ein bidirektionaler Funksender, das/der als Empfänger eingesetzt wird, oder ein Funkempfänger oder ein Netzwerk-Gateway, der/das die Funkfrequenzen im Rahmen eines lokalen oder flächendeckenden drahtlosen Telekommunikationsnetzwerks mit terrestrischer oder Satellitenübertragung nutzt, oder ein Modem auf Basis von Online-Trägerstrom oder eingesetzter bidirektionaler Transmitter auf Basis von Online-Trägerstrom, das/der als Empfänger eingesetzt wird, oder ein Empfänger auf Basis von Online-Trägerstrom oder ein Netzwerk-Gateway, der/das Online-Trägerstrom nutzt, oder eine Schnittstelle zum Anschluss eines Kabels oder eines Glasfaserkabels oder eine Schnittstelle zum Empfang und zur Demodulation von Lichtstrahlen mit einer oder mehreren Wellenlängen oder eine Schnittstelle zum Empfang und zur Demodulation eines variablen Magnetfelds oder eine Schnittstelle zum Empfang und zur Demodulation von Tonsignalen;
- eine Gruppenkennung oder die Kennung eines Umspannwerks oder die Kennung der Netzeinspeisung eines Umspannwerks oder die Kennung eines MS/NS-Transformators oder die Kennung eines geografischen Sektors oder die Kennung einer Nutzungsart der Elektrizität oder die Kennung einer Gerätekategorie oder die Kennung eines Herstellers und eines Gerätemodells oder der Version einer eingebetteten Software oder die Kennung einer Benutzerkategorie oder die Kennung einer Gebäudekategorie oder die Kennung eines Dienstanbieters oder die Kennung der Kategorie eines abonnierten Dienstes;
- ein elektronischer Zähler mit Kommunikationsfunktion für elektrische Energie, Gas, Wasser oder Wärme oder ein Mini-Gateway, das den zweiten Ausgang eines elektronischen Zählers mit Kommunikationsfunktion bildet, oder ein Überwachungssystem oder ein Sender oder ein als Sender eingesetzter Transmitter oder ein Transponder oder ein Zugangspunkt zu einem lokalen Netzwerk oder ein Zugangspunkt zu einem flächendeckenden Netzwerk;
- ein Modem oder ein bidirektionaler Transmitter, das/der als Empfänger eingesetzt wird, oder ein Empfänger oder ein Netzwerk-Gateway, der/das die Funkfrequenzen im Rahmen eines drahtlosen Telekommunikationsnetzwerks mit terrestrischer oder Satellitenübertragung nutzt, oder ein Empfänger, der in der Lage ist, Daten, die über terrestrische oder satellitengestützte Mittel übermittelt werden, zu empfangen, oder ein Modem oder ein bidirektionaler Transmitter, das/der als Empfänger eingesetzt wird, oder ein Empfänger oder ein Netzwerk-Gateway, der/das den Online-Trägerstrom nutzt oder ein Empfänger einer Tonfrequenz-Rundsteueranlage oder eine drahtgebundene oder drahtlose Schnittstelle zum Anschluss einer externen Unterbaugruppe für den Empfang von über Funk oder Online-Trägerstrom übermittelten Daten;
- ein Befehl zum Ein- oder Ausschalten oder ein Befehl zur Zuweisung eines bestimmten Werts an einen Parameter oder ein Befehl zum Löschen des Verbrauchs oder ein Befehl zur Speicherung von Energie oder ein Befehl für Lastabwurf oder ein Befehl für Wiederbelastung oder ein Befehl für den Transport von Informationen, die für einen Applikationsprozess außerhalb der Erfindung bestimmt sind, oder ein nichtiger Befehl, der keine Steuerwirkung hat, oder eine Information, die bestimmt, welche vorausgehend gespeicherte Konfigurationsangabe oder welche vorausgehend gespeicherten Konfigurationsdaten bei einem oder mehreren Identitätstests berücksichtigt werden sollen, die an empfangenen übermittelten Daten gleicher Art durchzuführen sind, oder der Ausdruck einer kombinatorischen Funktion, deren Eingangsvariablen ganz oder teilweise der mindestens einen Konfigurationsangabe oder ganz oder teilweise der mindestens einen Senderkennung entsprechen, oder das Ergebnis einer Berechnung auf Grundlage einer Konfigurationsangabe oder mehrerer Konfigurationsdaten oder auf Grundlage einer oder mehrerer Senderkennungen oder auf Grundlage von empfangenen oder in einem Speicher der Vorrichtung gespeicherten ergänzenden Daten, wobei das Ergebnis der kombinatorischen Funktion ein logischer Zustand ist, der bestimmt, ob die empfangene Information von der Vorrichtung genutzt oder ignoriert werden soll, oder mindestens ein Parameter in Verbindung mit den Steuerdaten oder mindestens ein Parameter in Verbindung mit Daten, die die Selektivität der Übermittlung bestimmen, oder die Kennung eines Senders der Übermittlung;
- mindestens ein Mikrocontroller oder mindestens ein System auf einem Chip oder mindestens eine Verarbeitungseinheit, die in Form einer Leiterplatte zur Verfügung steht, auf der Bauteile und Verbindungsmittel montiert sind, um ein digitales Verarbeitungsmodul zu bilden, das standardisierte technische Merkmale aufweist;
- das Stromnetz oder mindestens eine Solarzelle oder ein elektrokinetischer Generator oder eine Batterie oder eine elektrochemische Batterie.

3. Vorrichtung nach einem der Ansprüche 1 oder 2, die **dadurch gekennzeichnet ist, dass** die genannten ersten (2) und zweiten (3) Mittel zum Empfang von Daten zumindest teilweise gemeinsame Mittel sind und die Fähigkeit besitzen, Daten im Rahmen einer Punkt-zu-Punkt-Verbindung zu empfangen und übermittelte Daten zu empfangen.

4. Vorrichtung nach einem der Ansprüche 1 bis 3, die **dadurch gekennzeichnet ist, dass** die genannten ersten oder zweiten Hardware-Mittel oder auch die gemeinsamen Hardware-Mittel zum Empfang der Daten ferner die genannte Unterbaugruppe für die digitale Verarbeitung (4) oder den mindestens einen Speicher (11) umfassen.

5. Vorrichtung nach einem der Ansprüche 1 bis 4, die **dadurch gekennzeichnet ist, dass** die genannten ersten oder zweiten Mittel oder auch die gemeinsamen Mittel zum Empfang der Daten ferner Mittel zur Übertragung von Daten an mindestens ein entferntes Informationssystem umfassen.

6. Wobei dieses System eine Vielzahl von Vorrichtungen nach den vorgenannten Ansprüchen einschließt und weiterhin **dadurch gekennzeichnet ist, dass** es Folgendes umfasst:
- mindestens eine erste Netzwerkinfrastruktur zur Übertragung der Konfigurationsdaten, die von den genannten ersten Mitteln (2) einer Vorrichtung (1) direkt oder unter Zuhilfenahme mindestens eines Fremdgeräts empfangen werden können, das eine Gateway-Funktion erfüllt;
- mindestens eine zweite Netzwerkinfrastruktur oder eine zweite Betriebsart der ersten Netzwerkinfrastruktur, die mindestens einen Sender zur Übermittlung von Daten per Funk oder mittels Online-Trägerstrom umfasst, die von den genannten zweiten Mitteln (3) der Vorrichtung (1) direkt oder unter Zuhilfenahme mindestens eines Fremdgeräts, das eine Gateway-Funktion erfüllt, empfangen werden können;
- ein erstes Informationssystem zur Bestimmung mindestens eines Teils der Daten, die von der mindestens einen zweiten Netzwerkinfrastruktur oder von der zweiten Betriebsart der ersten Netzwerkinfrastruktur übermittelt werden sollen, um ein vorbestimmtes Betriebsziel zu erreichen.

7. System nach Anspruch 6, das weiterhin **dadurch gekennzeichnet ist, dass** das genannte erste Informationssystem mindestens eine Konfigurationsangabe bestimmt, die über die erste Netzwerkinfrastruktur im Rahmen der Punkt-zu-Punkt-Verbindungen an die Vorrichtungen (1) übertragen werden soll.

8. System nach einem der Ansprüche 6 oder 7, das weiterhin **dadurch gekennzeichnet ist, dass** es mindestens ein zweites Informationssystem umfasst, das auf einen Anwendungsbereich spezialisiert ist und die Fähigkeit besitzt, an das genannte erste Informationssystem das genannte vorbestimmte Betriebsziel zu übertragen, das erreicht werden soll.

9. System nach einem der Ansprüche 6 bis 8, das **dadurch gekennzeichnet ist, dass** sich das genannte zu erreichende Betriebsziel direkt oder indirekt auf eine kumulierten Menge Leistung oder elektrischer Energie bezieht, die in einem vorbestimmten geografischen Gebiet oder in einem vorbestimmten Teil eines Stromverteilungsnetzwerks gelöscht oder verbraucht oder gespeichert oder wiedergegeben werden soll.

10. System nach einem der Ansprüche 6 bis 9, das **dadurch gekennzeichnet ist, dass** sich das genannte zu erreichende Betriebsziel direkt oder indirekt auf die Synchronisierung mindestens einer Aktion innerhalb der Vielzahl der Vorrichtungen (1) oder auf die Verwaltung oder das Management eines Geräteparks bestehend aus den Vorrichtungen (1) bezieht.

11. Von den Hardware- oder Software-Mitteln in einer Vorrichtung eingesetztes Verfahren nach einem der Ansprüche 1 bis 5 zum selektiven Empfang der in einem Telekommunikationsnetzwerk oder in einem Netzwerk zur Übermittlung digitaler Signale übermittelten Daten, wobei das Verfahren **dadurch gekennzeichnet ist, dass** es folgende Schritte umfasst:
- Empfang der übermittelten Daten durch die genannten zweiten Mittel für den Empfang von Daten der genannten Vorrichtung;
- Verarbeitung aller oder eines Teils der genannten übermittelten und empfangenen Daten und aller oder eines Teils der Daten, die vorher von den genannten ersten Mitteln oder den genannten zweiten Mittel zum Empfang von Daten der genannten Vorrichtung empfangen wurden;
- Bestimmung, ob die empfangenen übermittelten Daten von der genannten Vorrichtung in Abhängigkeit vom Ergebnis der genannten Verarbeitung genutzt oder ignoriert werden sollen.

12. Verfahren nach Anspruch 11, das weiterhin **dadurch gekennzeichnet ist, dass** es folgende Schritte umfasst:
- Empfang mindestens einer Konfigurationsangabe durch die genannten ersten Mittel der genannten Vorrichtung im Rahmen einer Punkt-zu-Punktverbindung mit dem mindestens einen entfernten Informationssystem;
- Schreiben der vollständigen oder teilweisen mindestens einen empfangenen Konfigurationsangabe im mindestens einen Speicher der genannten Vorrichtung.

13. Verfahren nach einem der Ansprüche 11 oder 12, das weiterhin **dadurch gekennzeichnet ist, dass** es folgende Schritte umfasst:
- Extraktion einer Kennung des Senders zur Übermittlung aus den empfangenen übermittelten Daten;
- Schreiben einer eineindeutigen Kennung des Senders zur Übermittlung in den mindestens einen Speicher (11) der Vorrichtung (1).

14. Verfahren nach einem der Ansprüche 11 bis 13, das weiterhin **dadurch gekennzeichnet ist, dass** es einen Schritt umfasst, bei dem infolge eines Triggerereignisses mindestens eine Konfigurationsangabe oder mindestens eine eineindeutige Kennung eines Senders zur Übermittlung, von dem die Vorrichtung die Nachrichten empfängt, von der Vorrichtung (1) an ein entferntes Informationssystem übertragen wird.

15. Verfahren nach einem der Ansprüche 11 bis 14, das weiterhin **dadurch gekennzeichnet ist, dass** es folgende Schritte umfasst:
- Berücksichtigung eines Betriebsziels, das durch die selektive Übermittlung mindestens einer Nachricht erreicht werden soll, durch ein Informationssystem;
- Ausarbeitung des Inhalts der mindestens einen zu übermittelnden Nachricht durch das genannte Informationssystem in Abhängigkeit der von den Vorrichtungen, die die empfangenen übermittelten Daten nutzen, auszuführenden Aktion und der zum Erreichen des Betriebsziels erforderlichen Selektivität der Übermittlung, wobei der genannte Inhalt ganz oder teilweise ausgehend von den in der mindestens einen Datenbank gespeicherten Daten ausgearbeitet wird, auf die das genannte Informationssystem zumindest lesend zugreifen kann;
- Übermittlung mindestens einer Nachricht im Netzwerk durch mindestens einen vom Informationssystem ausgewählten Sender zur Übermittlung, um auf Grundlage der beherrschten Reichweite des mindestens einen ausgewählten Senders eine erste Stufe der Selektivität der Übermittlung zu bestimmen.

16. Verfahren nach Anspruch 15, das weiterhin **dadurch gekennzeichnet ist, dass** es einen Schritt umfasst, in dem das genannte Informationssystem eine Rückmeldung bezüglich der durch die selektive Übermittlung der mindestens einen Nachricht erzielten Wirkung berücksichtigt, um die Schritte des Anspruchs 15 mit einem neuen Betriebsziel zu wiederholen, mit der Absicht, die Differenz zwischen der angestrebten Wirkung und der erzielten Wirkung auszugleichen oder die genannte Differenz auf ein Maß zu vermindern, das als vernachlässigbar betrachtet werden kann.

17. Nutzung des Verfahrens nach einem der Ansprüche 11 bis 16 zum Ausgleich der Herstellung und des Verbrauchs von Strom in einem Stromnetz oder zum Schutz der Netzintegrität, und zwar durch Einwirkung im Hinblick auf eine Verminderung oder Erhöhung des Verbrauchs einer Vielzahl diffuser Lastleistungen, die direkt oder indirekt über Vorrichtungen gesteuert werden, die in der Lage sind, selektiv über Funk oder über Online-Trägerstrom in einem Telekommunikationsnetzwerk oder in einem Netzwerk zur Übermittlung digitaler Signale übermittelte Daten zu empfangen.

18. Nutzung des Verfahrens nach einem der Ansprüche 11 bis 16 zur Synchronisierung einer oder mehrerer Aktionen, die eine Vielzahl von Vorrichtungen einschließen, die in der Lage sind, über Funk oder über Online-Trägerstrom in einem Telekommunikationsnetzwerk oder in einem Netzwerk zur Übermittlung digitaler Signale übermittelte Daten selektiv zu empfangen, oder zur Verwaltung oder zum Management eines Geräteparks solcher Vorrichtungen oder eines Parks externer Geräte, die an solche Vorrichtungen angeschlossen sind.

## Claims

1. Device (1) for selectively receiving data broadcast simultaneously to a predetermined subset of recipient devices from among massive quantities of receivers which are capable of physically receiving the data which are broadcast by radio or by power-line communication in a telecommunications network or in a digital signal broadcasting network, comprising:
- at least one digital processing subassembly (4) comprising at least one microprocessor (5), at least one program memory (6);
- a low-voltage power supply subassembly (12) providing at least one direct voltage to power the hardware means of the device (1), said power supply subassembly being powered by at least one energy source (13); said device (1) being **characterized in that** it further comprises:
- first means (2) for receiving at least one configuration data usable for limiting the effective reception of the broadcast data to only the previously determined devices, the at least one configuration data being transmitted within the framework of a point-to-point link between at least one remote information system and the device (1);
- second means (3) for receiving broadcast data including data determining the selectivity of the broadcast;
- the at least one digital processing subassembly (4) further comprising an interface (7) with said first means (2), an interface (8) with said second means (3), an interface (9) with means (10) for using data received by said second means (3), at least one memory (11) for storing all or part of the at least one configuration data or at least one broadcast transmitter identifier, at least one program (14) for determining whether received broadcast data should be used or ignored by the device (1) as a function of said data determining the selectivity of the broadcast, and of all or part of the at least one data having been previously stored in the at least one memory (11).

2. Device according to claim 1 **characterized in that** said first means (2), the at least one configuration data, a third-party device acting as a gateway between a network and said device to enable it to indirectly receive data, said second means (3), the received broadcast data, the at least one digital processing sub-assembly (4), and the at least one energy source (13), are respectively:
- a radio modem or a bidirectional radio transmitter used as a receiver, or a radio receiver or a network gateway using radio frequencies in the context of a local or wide-area wireless telecommunications network, terrestrial or satellite, or a power-line communication modem or a bidirectional power-line communication transmitter used as a receiver, or a power-line communication receiver or a network gateway using power-line communication, or an interface for connecting a cable or an optical fiber, or an interface for receiving and demodulating light rays comprising one or more wavelengths, or an interface for receiving and demodulating a variable magnetic field, or an interface for receiving and demodulating sound signals;
- a group identifier, or a source substation identifier, or a network departure identifier of a source substation, or a medium-voltage/low-voltage transformer identifier, or a geographic sector identifier, or an electricity usage type identifier, or a device category identifier, or a device manufacturer and model identifier or embedded software version identifier, or a user category identifier, or a building category identifier, or a service operator identifier, or a subscribed service category identifier;
- a communicating electronic meter for electricity, gas, water or heat, or a mini-gateway forming a secondary output of a communicating electronic meter, or a monitoring system, or a transmitter, or a transmitter used as a transmitter, or a transponder, or a local area network access point, or a wide area network access point;
- a modem or a bidirectional transmitter used as a receiver, or a receiver or a network gateway using radio frequencies as part of a terrestrial or satellite wireless telecommunications network, or a receiver capable of receiving data broadcast by terrestrial or satellite means, or a modem or a bidirectional transmitter used as a receiver, or a receiver or a network gateway using power-line communication, or a ripple control receiver, or a wired or wireless interface for connecting an external sub-assembly for receiving data broadcast by radio or power-line communication;
- a start or stop command, or a command to assign a determined value to a parameter, or a consumption erasure command, or an energy storage command, or a load shedding command, or a load re-loading command, or a command to transport information intended for an application process external to the invention, or a null command having no effect as a command, or information determining the previously stored configuration data to be taken into account in one or more identity tests to be carried out with received broadcast data of the same nature, or the expression of a combinatorial function whose input variables are all or part of the at least one configuration data or all or part of the at least one transmitter identifier, or the result of a calculation relating to one or more configuration data or to one or more transmitter identifiers or to additional data received or stored in a memory of the device, the result of the combinatorial function being a state logic determining whether the received information should be used or ignored by the device, or at least one parameter related to control data, or at least one parameter related to data determining the selectivity of the broadcast, or a broadcast transmitter identifier;
- at least one microcontroller, or at least one system on a chip, or at least one processing unit available in the form of a printed circuit on which components and connectors are mounted to form a digital processing module having standardized technical characteristics;
- the electrical network, or at least one photovoltaic cell, or an electrokinetic generator, or a battery, or an electrochemical cell.

3. Device according to any one of claims 1 or 2, **characterized in that** said first (2) and second (3) means for receiving data are at least partly common means, capable of receiving data in the context of a point-to-point link, and of receiving broadcast data.

4. Device according to any one of claims 1 to 3, **characterized in that** said first or second hardware means, or the common hardware means for receiving data, further comprise said digital processing subassembly (4) or at least one memory (11).

5. Device according to any one of claims 1 to 4, **characterized in that** said first or second means, or the common means for receiving data, further comprise means for transmitting data to at least one remote information system.

6. System including a plurality of devices according to the preceding claims, **characterized in that** it further comprises:
- at least one first network infrastructure for transmitting configuration data capable of being received directly, or via at least one third-party device acting as a gateway, by said first means (2) of a device (1);
- at least one second network infrastructure, or a second operating mode of the first network infrastructure, comprising at least one broadcast transmitter for broadcasting by radio or power-line communication data capable of being received directly, or via at least one third-party device acting as a gateway, by said second means (3) of the device (1);
- a first information system for determining at least in part the data to be broadcast by the at least one second network infrastructure or by the second operating mode of the first network infrastructure to achieve a predetermined operational objective.

7. System according to claim 6, **characterized in that** said first information system further determines at least one configuration data to be transmitted by the first network infrastructure to devices (1) within the framework of point-to-point links.

8. System according to any one of claims 6 or 7, **characterized in that** it further comprises at least one second information system, specialized in a field of use and capable of transmitting to said first information system said predetermined operational objective to be achieved.

9. System according to any one of claims 6 to 8, **characterized in that** said operational objective to be achieved is directly or indirectly related to a cumulative quantity of power or electrical energy, to be shed or consumed or stored or returned to a predetermined geographical territory or in a predetermined part of an electricity distribution network.

10. System according to any one of claims 6 to 9, **characterized in that** said operational objective to be achieved is directly or indirectly related to the synchronization of at least one action in a plurality of devices (1) or to manage or administer a fleet of devices (1).

11. Method implemented by hardware or software means in a device according to any one of claims 1 to 5 for selectively receiving data broadcast in a telecommunications network or in a digital signal broadcasting network, the method being **characterized in that** it comprises the steps of:
- receiving broadcast data, by said second means for receiving data from said device;
- processing all or part of said received broadcast data and all or part of data previously received by said first means or by said second means for receiving data from said device;
- determining whether received broadcast data should be used or ignored by said device based on the result of said processing.

12. Method according to claim 11 **characterized in that** it further comprises the steps:
- receiving at least one configuration data by said first means of said device within the framework of a point-to-point link with the at least one remote information system;
- writing in the at least one memory of said device all or part of the at least one configuration data received.

13. Method according to any one of claims 11 or 12, **characterized in that** it further comprises the steps:
- extracting an identifier of the broadcast transmitter from the received broadcast data;
- writing a one-to-one identifier of the broadcast transmitter into the at least one memory (11) of the device (1).

14. Method according to any one of claims 11 to 13, **characterized in that** it further comprises a step of transmission by the device (1) to a remote information system, of at least one configuration data or at least one one-to-one identifier of a broadcast transmitter from which the device receives messages, on the occasion of a triggering event.

15. Method according to any one of claims 11 to 14, **characterized in that** it further comprises the steps:
- taking into account by an information system an operational objective to be achieved by the selective broadcasting of at least one message;
- working out by said information system of the content of the at least one message to be broadcast, based on the action to be performed by the user devices of received broadcast data and the selectivity of the broadcast necessary to achieve the operational objective, all or part of said content being developed from data stored in at least one database which said information system can access at least in read mode;
- broadcasting at least one message in the network by at least one broadcast transmitter selected by the information system to determine a first level of selectivity of the broadcast based on the control of the coverage of the at least one selected transmitter.

16. Method according to claim 15, **characterized in that** it further comprises a step of taking into account by said information system feedback on the effect obtained by the selective diffusion of the at least one message to repeat the steps of claim 15 with a new operational objective aimed at cancelling the difference between the objective effect and the effect obtained, or until said difference is considered to be negligible.

17. Use of the method according to any one of claims 11 to 16 for balancing the production and consumption of electricity in an electrical network, or for protecting its integrity, by acting remotely to decrease or increase the consumption of a plurality of diffuse power loads controlled directly or indirectly by devices capable of selectively receiving data broadcast by radio or by power-line communication in a telecommunications network or in a digital signal broadcasting network.

18. Use of the method according to any one of claims 11 to 16 for synchronizing one or more actions involving a plurality of devices capable of selectively receiving data broadcast by radio or by power-line communication in a telecommunications network or in a digital signal broadcasting network, or for managing, or for administering a fleet of such devices or a fleet of external devices connected to such devices.
